(19) Europäisches Patentamt
European Patent Office
Office européen des brevets

(11) **EP 4 350 563 A1**

(12) **EUROPEAN PATENT APPLICATION**
published in accordance with Art. 153(4) EPC

(43) Date of publication:
**10.04.2024 Bulletin 2024/15**

(21) Application number: **22815559.4**

(22) Date of filing: **09.02.2022**

(51) International Patent Classification (IPC):
*G06F 30/10* (2020.01)       *G06F 30/20* (2020.01)

(52) Cooperative Patent Classification (CPC):
**G06F 30/10; G06F 30/20**

(86) International application number:
**PCT/JP2022/005024**

(87) International publication number:
**WO 2022/254800 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.06.2021 PCT/JP2021/021462**

(71) Applicant: **Nature Architects Inc.**
**Tokyo 107-0052 (JP)**

(72) Inventors:
• **TANIMICHI Kotaro**
**Tokyo 107-0052 (JP)**
• **OHSHIMA Taisuke**
**Tokyo 107-0052 (JP)**
• **SUTO Kai**
**Tokyo 107-0052 (JP)**

(74) Representative: **Lambsdorff & Lange**
**Patentanwälte**
**Partnerschaft mbB**
**Grillparzerstraße 12A**
**81675 München (DE)**

(54) **STRUCTURE DESIGN SEARCH APPARATUS, STRUCTURE DESIGN SEARCH METHOD, AND STRUCTURE PRODUCTION METHOD**

(57)     One embodiment of the present invention provides an apparatus 100 for constructing an environment enabling search for a design parameter and/or function parameter that satisfies a desired requirement regarding one or more structures. A control unit 130 of the apparatus 100 is configured to execute: setting a design variable vector that includes a plurality of groups of design parameter value sets each including a design parameter value to be inputted to one or more design variables regarding a configuration of the structure; acquiring, by executing an analysis process based on a predetermined analysis condition regarding the design variable vector, a function variable vector that includes a plurality of groups of function parameter value sets each including a function parameter value regarding one or more function variables related to a function exhibited by the structure; storing, in a storage unit 120, the design parameter value set in association with the function parameter value set acquired on the basis of the design parameter value set, for each of the design parameter value sets and each of the function parameter value sets; and storing, in association with each other in the storage unit 120, one design variable vector, one or more analysis conditions, and one or more function variable vectors acquired for the respective analysis conditions as a result of executing the analysis process based on the one or more analysis conditions regarding the design variable vector.

FIG. 1

**Description**

Technical Field

The present invention relates to a design search apparatus and a design search method for a structure, and the like.

Background Art

Patent Literature (hereinafter referred to as "PTL") 1 discloses a design method that allows the optimal geometry of a structure to be designed. More specifically, PTL 1 proposes a design method including: (1) converting CAD data of a structure created based on design data of the structure into CAE data; (2) detecting a dynamic response quantity for the geometry of the structure converted into the CAE data by CAE structure analysis and determining producibility of the geometry of the structure defined as the CAD data; (3) detecting a correlation among the CAD data of the structure, the dynamic response quantity, and the producibility; (4) changing the CAD data of the structure based on the correlation until the optimal geometry of the structure in which the dynamic response quantity satisfies design conditions for the structure and that is producible is detected; and (5) updating the correlation among the CAD data of the structure, the dynamic response quantity, and the producibility based on the changed CAD data of the structure and detecting the optimal geometry of the structure based on the updated correlation such that the dynamic response quantity satisfies the design conditions of the structure and the geometry of the structure is producible.

According to the design method proposed in PTL 1, the geometry of the structure included in the first created CAD data is modified to become the optimal geometry satisfying the predetermined requirements.

Citation List

Patent Literature

PTL 1
Japanese Patent Application Laid-Open No. 2003-223480

Summary of Invention

Technical Problem

According to the design method proposed in PTL 1, it is possible to locally design the optimal geometry satisfying a desired requirement for a structure having a certain specific geometry. In other words, the design method of PTL 1 allows the optimal geometry of the structure to be designed only under the conditions limited to the specific geometry.

As described above, the design method of PTL 1 allows the optimal geometry of a structure having a certain specific geometry to be obtained, but does not make it possible to search for a structure satisfying a targeted requirement while changing individual parameters by overlooking various design function spaces.

A structure having a geometry created first by a designer is not necessarily an appropriate structure satisfying a desired requirement. A structure having another geometry may satisfy a similar requirement, and further a structure having another geometry may also satisfy a more advantageous requirement. For this reason, there is a need for a designer who wishes to design a more appropriate structure, with high conviction that the structure is the conceivable optimal structure, by searching for a structure satisfying a desired requirement while changing parameters of various requirements in a wider design function space rather than in a limited design function space.

Further, in the design method proposed in PTL 1, it is necessary to execute a series of processing of (1) to (5) described above each time the optimal geometry of one structure is obtained. Further, it is also necessary to perform the series of processing from the beginning each time the optimal geometry is obtained in a case where only the geometry of a structure or constraint conditions are partially changed. For this reason, the design method of PTL 1 does not make it possible to search for a structure/function satisfying a desired requirement with quick readiness while changing parameter values of various design /function variables.

Solution to Problem

One aspect of the present invention provides an apparatus that constructs an environment which allows a search for a design parameter and/or a function parameter, where the design parameter and/or the function parameter satisfies/satisfy a desired requirement for one or a plurality of structures. The apparatus includes a control unit and a storage unit, and the control unit is configured to execute: setting one or a plurality of design variable vectors that includes a plurality of groups of design parameter value sets each including one or a plurality of design parameters values to be inputted to one or a plurality of design variables related to a configuration of the one or plurality of structures; acquiring, by executing analysis processing based on a predetermined analysis condition for the one or plurality of design variable vectors, one or a plurality of function variable vectors that includes a plurality of groups of function parameter value sets each including one or a plurality of function parameter values related to one or a plurality of function variables related to a function exhibited by the one or plurality of structures; storing, for each of the design parameter value sets and each of the function parameter value sets, one of the design parameter value sets and one of the function parameter value sets in a state of being associated with each other in the storage unit, where the one of the function parameter value sets is acquired based on the one of the design parameter value sets; and storing one of the one or plurality of design variable vectors, one or a plurality of the analysis conditions, and the one or plurality of function variable vectors in association with each other in the storage unit, where the one or plurality of function variable vectors is acquired for each of the one or plurality of analysis conditions as a result of executing the analysis processing based on the one or plurality of analysis conditions for the one or plurality of design variable vectors.

Other features and advantages of the present invention can be understood from the following description and accompanying drawings, which are given in an illustrative and non-exhaustive manner.

Brief Description of Drawings

FIG. 1 is a functional block diagram of a design search apparatus for a structure according to Embodiment 1 of the present invention;
FIG. 2 illustrates an octet-truss structure;
FIGS. 3A and 3B illustrate an X-shaped hinge structure;
FIG. 4 illustrates a lattice homogenized as a linear elastic body;
FIG. 5 illustrates a compliant mechanism evaluated as a hinge spring;
FIG. 6 illustrates a damping member evaluated as a six degrees of freedom spring;
FIG. 7 is a schematic diagram illustrating distribution of various structures corresponding to two function variables of a first function variable and a second function variable, which may be generated by the design search apparatus of the present embodiment;
FIG. 8 is a flowchart illustrating a method of constructing a design function space by the design search apparatus of the present embodiment;
FIG. 9 is a flowchart illustrating a method of searching for design/function parameter values by the design search apparatus of the present embodiment;
FIG. 10A is a schematic diagram illustrating an exemplary design search screen including a design function space, which is generated by the design search apparatus of the present embodiment;
FIG. 10B is a schematic diagram illustrating another exemplary design search screen including a design function space, which is generated by the design search apparatus of the present embodiment;
FIG. 11 illustrates a state in which, in the design search screen illustrated in FIG. 10A, parameter values are inputted with three line segments and a region surrounded by the line segments is selected as a numerical value range of the parameter values;
FIG. 12 illustrates one variation of the design search apparatus according to the present embodiment;
FIG. 13 illustrates one variation of the design search apparatus according to the present embodiment;
FIGS. 14A and 14B illustrate examples of implementation of a design search screen generated by the design search apparatus of the present embodiment;
FIGS. 15A and 15B illustrate examples of implementation of a design search screen generated by the design search apparatus of the present embodiment;
FIGS. 16A and 16B illustrate examples of implementation of a design search screen generated by the design search apparatus of the present embodiment;
FIG. 17 illustrates a relation between two design variables $x_1$ and $x_2$ of a design variable vector X and two function variables $y_1$ and $y_2$ of a function variable vector Y obtained as a result of analysis of the two design variables $x_1$ and $x_2$ with respect to one variation of the present embodiment;
FIG. 18 illustrates a relation between the design variables $x_1$ and $x_2$ in a case where the design variable $x_1$ is fixed in a design function space composed of the two design variables $x_1$ and $x_2$ with respect to one variation of the present embodiment;
FIG. 19 illustrates a relation between the design variables $x_1$ and $x_2$ in a case where the function variable $y_1$ which is not selected for an axis is fixed in a design function space composed of the two design variables $x_1$ and $x_2$ with

respect to one variation of the present embodiment;

FIG. 20 illustrates a relation between the function variables $y_1$ and $y_2$ in a case where the design variable $x_1$ which is not selected for an axis is fixed in a design function space composed of the two function variables $y_1$ and $y_2$ with respect to one variation of the present embodiment;

FIG. 21 illustrates a relation between the function variables $y_1$ and $y_2$ in a case where the function variable $y_1$ is fixed in a design function space composed of the two function variables $y_1$ and $y_2$ with respect to one variation of the present embodiment;

FIG. 22 illustrates a relation between the design variable $x_1$ and the function variable $y_1$ in a case where the design variable $x_1$ which is selected for an axis is fixed in a design function space composed of the design variable $x_1$ and the function variable $y_1$;

FIG. 23 illustrates a relation between the design variable $x_1$ and the function variable $y_1$ in a case where the design variable $x_2$ is fixed in a design function space composed of the design variable $x_1$ and the function variable $y_1$ with respect to one variation of the present embodiment;

FIG. 24 illustrates a relation between the design variable $x_1$ and the function variable $y_1$ in a case where the function variable $y_1$ is fixed in a design function space composed of the design variable $x_1$ and the function variable $y_1$ with respect to one variation of the present embodiment;

FIG. 25 illustrates a relation between the design variable $x_1$ and the function variable $y_1$ in a case where the function variable $y_2$ which is not selected for an axis is fixed in a design function space composed of the design variable $x_1$ and the function variable $y_1$ with respect to one variation of the present embodiment;

FIG. 26 illustrates a relation between the design variable $x_1$ and the function variable $y_1$ in a case where the design variable $x_2$ and the function variable $y_2$ each of which is not selected for an axis are fixed in a design function space composed of the design variable $x_1$ and the function variable $y_1$ with respect to one variation of the present embodiment; and

FIG. 27 illustrates an entire flow of processing of Embodiment 2 of the present invention.

Description of Embodiments

First, a summary of a design search apparatus for a structure according to Embodiment 1 of the present invention will be described.

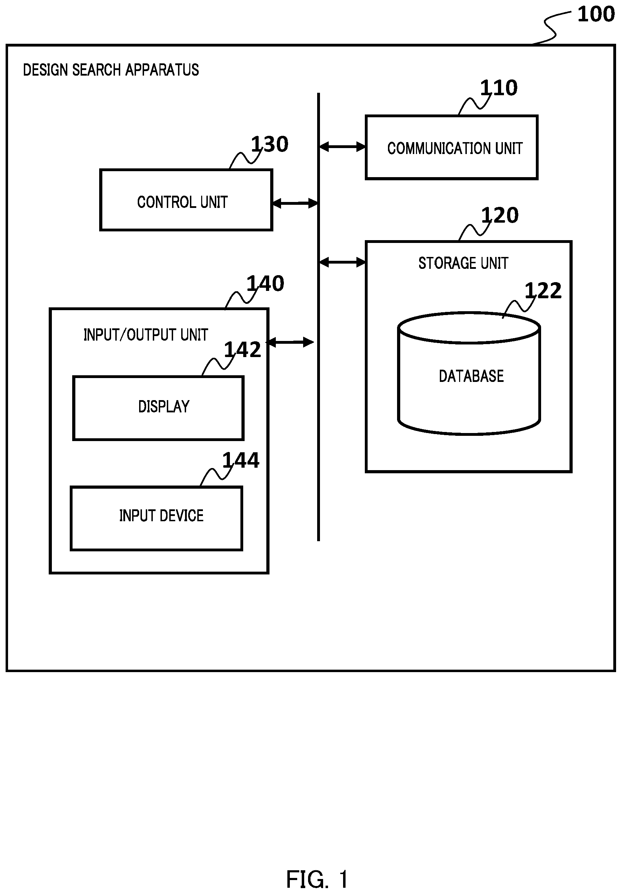

A design search apparatus 100 according to the present embodiment (see FIG. 1) generally provides a function of accumulating pieces of information required for a structure design search and constructing a design search environment and a function of searching for a design parameter and/or a function parameter that may satisfy a desired condition of the user in the constructed design search environment.

The construction of a design search environment by the design search apparatus 100 according to the present embodiment includes accumulating an evaluation function, an evaluation function parameter, a design variable vector, and a function variable vector in association with each other as a data set for various structures having different geometric structures. The design variable vector includes a geometry definition function, a geometry parameter, a material definition function, and a material parameter. The function variable vector includes one or a plurality of function parameter values related to a function exhibited by a structure and is outputted as a result of application of the design variable vector to the evaluation function. The evaluation function defines a series of processing for outputting the function variable vector. The geometry definition function, the geometry parameter, the material definition function, and the material parameter configure a structure. The geometry definition function of the design variable vector describes processing for generating a geometry of a structure, which is defined by the geometry definition function, and the geometry parameter includes one or a plurality of geometry parameters to be inputted to one or a plurality of variables included in the geometry definition function. The material definition function describes processing for specifying an element characteristic (material) of a structure, which is defined by the material definition function, and the material parameter includes one or a plurality of material parameter values to be inputted to one or a plurality of variables included in the material definition function (hereinafter, the geometry parameter and the material parameter may also be collectively referred to as "design parameter"). The evaluation function, the design variable vector, and the function variable vector that are to be included in a design search environment can be set as appropriate.

The respective parameter values in the accumulated data set can be presented as a sample point cloud in which sample points exist discretely, and further can be presented continuously by interpolating those values.

Further, in the search for a design parameter and/or a function parameter by the design search apparatus 100 according to the present embodiment, as an example, when the user selects, from variables of design and function variable vectors accumulated in the design search apparatus in the above-described manner, variables which the user wishes to search (for example, function variables 1 and 2), a sample point cloud of those function variables is displayed discretely and/or continuously on a design function space with those function variables 1 and 2 as the axes. In this design function space, the user can search for a function parameter which satisfies a desired condition and a design parameter in association therewith.

In a case where there are design/function parameter values that satisfy a desired condition, it is possible to prepare a structure that realizes a function expected by the user by designing a structure based on those parameter values.

On the other hand, a case where there is no function parameter value satisfying a desired condition means that there is no structure satisfying the desired condition in a design search environment that has been constructed at that time. In this case, a design parameter that realizes a function parameter value satisfying the condition is newly obtained, and the newly obtained design parameter is added to the already constructed design search environment to extend the design function space, and thus, it is possible to use the extended design function space in a subsequent search.

According to the design search apparatus 100 according to the present embodiment, a design search environment in which one or a plurality of groups of design parameter values related to a design variable vector and one or a plurality of groups of design parameter value values related to a function variable vector are accumulated in association with each other is constructed for various structures. Accordingly, in a design function space composed of variables on which the user wishes to focus in design of a structure, it is possible to search for design/function parameter values that satisfy a desired condition, not only for a specific structure, but also across various structures.

Further, it is also possible to search for the degree of freedom in design while changing parameters of variables, such as how a value of a variable changes when a parameter value of another variable is changed or to what extent a parameter value of a variable can be changed for satisfying a desired condition in a state in which a parameter value of another variable is fixed.

Next, the configuration of the design search apparatus 100 for a structure according to one embodiment of the present invention will be described.

FIG. 1 is a functional block diagram of a design search apparatus for a structure according to one embodiment of the present invention. As illustrated in FIG. 1, the design search apparatus 100 according to the present embodiment includes a communication unit 110, a storage unit 120, a control unit 130, and an input/output unit 140.

The communication unit 110 is a communication interface for communicating with a terminal (not illustrated) different from the design search apparatus 100 via a communication network. For example, various communication protocols such as Transmission Control Protocol/Internet Protocol (TCP/IP) can be employed.

The storage unit 120 stores an operating system (OS) program, various computer programs for various control processing and causing the control unit 130 to execute operations described in the present embodiment, input data inputted through the input/output unit 140, generation data generated by processing in the control unit 130, contents of communication with other terminals, and the like. Further, the storage unit 120 includes a database (hereinafter also referred to as "DB") 122 in which a table related to the evaluation function, a table related to the design variable vector, a table related to the function variable vector, and design function data such as sample point cloud data in which various values of each variable of the design variable vector and various values of each variable of the function variable vector are associated with each other are stored. Details of these pieces of information which are stored in the DB 122 will be described later.

The storage unit 120 preferably includes a non-volatile storage medium in which a storage state is retained even when the power supply of the design search apparatus 100 is switched off. For example, the storage unit 120 includes an optical disk storage such as a hard disk drive (HDD), a solid state drive (SSD), a compact disc (CD), a digital versatile disc (DVD), and a Blu-ray disc (BD), and a non-volatile storage such as a non-volatile random access memory (NVRAM), an erasable programmable read only memory (EPROM), and a flash memory. Note that, although the storage unit 120 may further include a volatile storage such as a static random access memory (SRAM), at least the above-described computer programs and design function data are stored in a non-volatile (non-transitory) storage medium of the storage unit 120.

Further, the storage unit 120 may store various data or programs such as data for performing graphical representations of sliders, selection items, and the like that constitute a screen displayed on a display 142 of the input/output unit 140, text data required for displaying each information constituting the screen, layout determination data for determining the layout of the screen, and programs for updating storage information based on inputted contents.

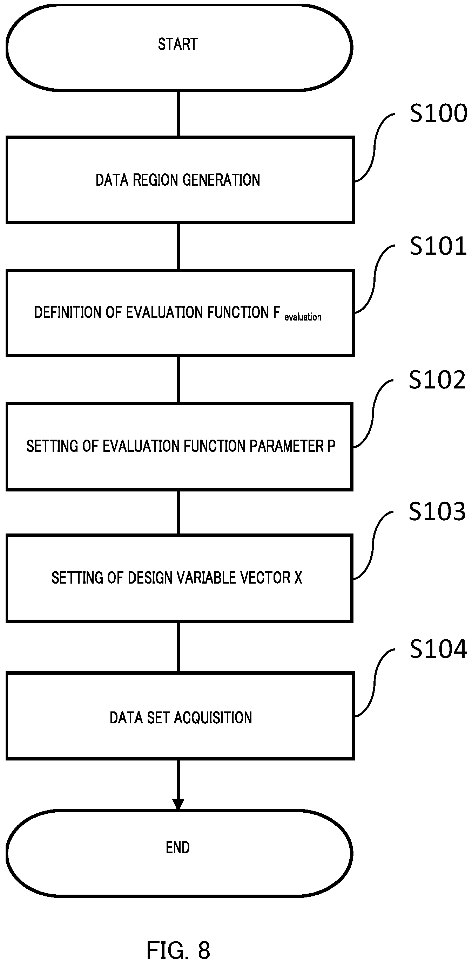

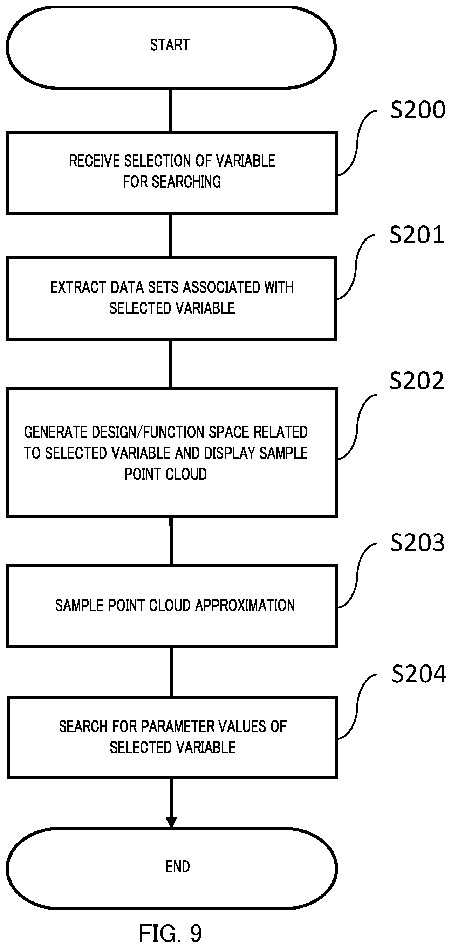

The control unit 130 controls the entire operation of the design search apparatus 100 by executing the computer programs stored in the storage unit 120, and operates to realize the functions of the design search apparatus 100 as described with reference to, in particular, FIGS. 8 and 9. The control unit 130 is configured with, for example, a central processing unit (CPU), a graphics processing unit (GPU), a general-purpose computing on GPU (GPGPU), an application-specific integrated circuit (ASIC), an embedded processor, a microprocessor, a digital signal processor (DSP), or a combination thereof. The control unit 130 may be configured with one or a plurality of processors.

The input/output unit 140 includes the display 142 as an output unit and an input device 144 as an input unit. As the display 142, a display apparatus having an arbitrary form, such as a display monitor, a computer tablet apparatus (including a computer tablet apparatus with a touch-screen display), and a projector can be used. The input device 144 may be configured with, for example, a keyboard, a pointing device such as a mouse and a joystick, a touch screen, or a combination thereof. In a case where the display 142 is a touch-screen display device, the touch screen thereof can also be used as the input device 144.

Table 1 indicates an example of a data structure and data items of design function data that are stored in the database 122 of the design search apparatus 100 illustrated in FIG. 1.

[Table 1]

| Evaluation function $f_{evaluation}$ label | Evaluation function parameter P | Design variable vector X | Function variable vector Y |
|---|---|---|---|
| Label_$f_{evaluation\ 1}$ | $P_1$ | $X_1$ | $Y_1$ |
| Label_$f_{evaluation\ 2}$ | $P_2$ | $X_2$ | $Y_2$ |
| Label_$f_{evaluation\ 3}$ | $P_3$ | $X_3$ | $Y_3$ |
| Label_$f_{evaluation\ 4}$ | $P_4$ | $X_4$ | $Y_4$ |
| Label_$f_{evaluation\ 5}$ | $P_5$ | $X_5$ | $Y_5$ |
| Label_$f_{evaluation\ 1,}$ Label_$f_{evaluation\ 2}$ | $P_1, P_2$ | $X_6$ | $Y_1, Y_2$ |
| ... | ... | ... | ... |

As indicated in Table 1, the design function data stored in the database 122 of the storage unit 120 of the design search apparatus 100 include:

(1) a label indicating an evaluation function $f_{evaluation}$ that defines a series of processing for outputting a function variable vector Y including one or a plurality of function parameter values related to a function exhibited by a structure;
(2) an evaluation function parameter P which is substituted for a variable of an evaluation function f evaluation,
(3) a design variable vector X which includes the geometry definition function, the geometry parameter value, the material definition function, and the material parameter value, which configure a structure; and
(4) a function variable vector Y which is outputted as a result of application of a design variable vector X to an evaluation function $f_{evaluation}$.

The design function data are stored, with an evaluation function $f_{evaluation}$ label, an evaluation function parameter P, a design variable vector X, and a function variable vector Y as a group of data sets, in the database 122.

(1) Evaluation Function $f_{evaluation}$

The "evaluation function $f_{evaluation}$" is a function that defines a series of processing for outputting a certain function variable vector Y and includes one or a plurality of variables to which a value can be inputted. As an example, the evaluation function $f_{evaluation}$ may be implemented in the form of a compiled binary file that describes processing that is executed by the control unit 130 of the design search apparatus 100 for outputting a certain function variable vector Y The evaluation function $f_{evaluation}$ varies depending on what is outputted as the function variable vector Y

For example, in a case where the evaluation function $f_{evaluation}$ for outputting the stiffness characteristic of each unit of a structure as the function variable vector Y is defined, a requirement required to output a desired stiffness characteristic (function variable vector Y) is defined. In this case, the evaluation function $f_{evaluation}$ defines, for example, a series of processing such as meshing setting for analysis of a structure defined by the design variable vector X to be inputted, setting of boundary conditions (constraint conditions and load conditions) to be applied to the structure, setting of material information on the structure, setting of an analysis condition(s) (for example, as setting of processing for obtaining the stiffness characteristic of each unit of the structure from the output of the evaluation function $f_{evaluation}$, the elastic modulus is determined based on a force applied to the each unit of the structure and bending displacement/torsional displacement of the each unit, and/or the like), and includes a variable(s) to which a value can be externally inputted with respect to the settings thereof.

Among those mentioned above, the setting of the boundary conditions will be described as an example. The boundary conditions (constraint conditions and load conditions) can be set, for example, by defining the evaluation function $f_{evaluation}$ such that a plane for which the boundary conditions are set is automatically detected and set with respect to a structure defined by the design variable vector X. In this case, the boundary conditions can be set specifically by defining that the xy plane ($Z_{min}$ plane) which passes through the minimum value on the z-axis of a bounding box delimiting a space that accommodates the structure defined by the design variable vector X is the fixed plane of the structure, and that a load is applied to the xy plane ($Z_{max}$ plane), which passes through the maximum value on the z-axis of the bounding box, in the x-axis direction.

Further, in a case where the evaluation function $f_{evaluation}$ defines a series of processing of outputting the vibration transmissibility, the evaluation function $f_{evaluation}$ defines, for example, a series of processing such as meshing setting, setting of the boundary conditions (point pass disposition position, mass of mass point, excitation point, excitation direction, excitation force, receiving point, and the like) to be applied to the structure, and setting of the vibration transmissibility in each frequency value, and includes a variable(s) to which a value can be externally inputted with respect to the settings thereof.

One or a plurality of setting items (variables) that configures the evaluation function $f_{evaluation}$ is stored as an evaluation function setting item table in the database 122 as in a data structure indicated in Table 2 below, for example. The evaluation function $f_{evaluation}$ allows the design search apparatus 100 to generate a desired evaluation function $f_{evaluation}$ by the user of the design search apparatus 100 selecting, on a user interface (UI) screen displayed on the display 142 by the control unit 130 of the design search apparatus 100, a required setting item from the table by using the input device 144. Alternatively, in a case where the design search apparatus 100 is configured such that a setting item of the evaluation function can be inputted by script description, the user can describe a script by using the input device 144 to input a setting item. A setting item inputted in the above-described manner is also preferably stored additionally in the evaluation function setting item table for later use.

[Table 2]

| Evaluation function setting item table | Setting item |
|---|---|
| 1 | ▪ |
| 2 | ▪ |
| 3 | ▪ |
| 4 | ▪ |
| 5 | ▪ |
| ... | ... |

The evaluation function $f_{evaluation}$ generated in the above-described manner is stored, in the database 122, in association with a "label" indicative thereof as an evaluation function table as in a data structure indicated in Table 3 below, for example. When the control unit 130 of the design search apparatus 100 receives an input of an end after the selection of an evaluation function setting item is performed and an evaluation function $f_{evaluation}$ is generated as described above, the control unit 130 generates a label indicating the evaluation function $f_{evaluation}$, and stores the label and the evaluation function $f_{evaluation}$ in association with each other in the database 122.

[Table 3]

| Evaluation function f evaluation label | Evaluation function $f_{evaluation}$ |
|---|---|
| Label_$f_{evaluation\ 1}$ | $f_{evaluation\ 1}$ |
| Label_$f_{evaluation\ 2}$ | $f_{evaluation\ 2}$ |
| Label_$f_{evaluation\ 3}$ | $f_{evaluation\ 3}$ |
| Label_$f_{evaluation\ 4}$ | $f_{evaluation\ 4}$ |
| Label_$f_{evaluation\ 5}$ | $f_{evaluation\ 5}$ |
| ... | ... |

A label indicating an evaluation function $f_{evaluation}$ can be represented by a character string. The character string may be readable by the control unit 130 of the design search apparatus 100, and is configured by listing words and numbers that can be recognized by a person, by encoding with a random character sequence that is not understandable to a person, or the like. The design search apparatus 100 is configured such that when the design search apparatus 100 reads a character string label thereof, the design search apparatus 100 can reproduce the corresponding

evaluation function f $_{evaluation}$.

The data structure indicated in Table 1 stores "labels", each indicating an evaluation function f $_{evaluation}$ defined in the above-described manner. The control unit 130 of the design search apparatus 100 specifies an evaluation function f $_{evaluation}$ corresponding to an evaluation function f $_{evaluation}$ label stored in the data structure indicated in Table 1 by referring to the data structure indicated in Table 3.

(2) Evaluation Function Parameter P

The "evaluation function parameter P" is a numerical value vector configured with a parameter value (numerical value) which is substituted for each variable of an evaluation function f $_{evaluation}$. The evaluation function parameter P includes one or a plurality of "variable types", which are information indicating each variable of an evaluation function f $_{evaluation}$, for which a numerical value is substituted, and one or a plurality of "parameter values" associated with the one or plurality of variable types, respectively. As an example, data of the evaluation function parameter P are stored as in "Pa_a1, Pb_b1, Pc_c1". In this case, Pa, Pb, and Pc indicate variable types corresponding to each variable of an evaluation function f $_{evaluation}$, and a1, b1, and c1 indicate parameter values associated therewith, respectively.

The user defines an evaluation function f $_{evaluation}$ in the above-described manner, and then inputs parameter values to be substituted for variables of the respective requirement items of the evaluation function f $_{evaluation}$ by using the input device 144. The inputted parameter values are stored, in a state of being associated with the corresponding respective variables of the evaluation function f $_{evaluation}$, as an evaluation function parameter P (numerical value vector) in association with an evaluation function f $_{evaluation}$ thereof in the data structure.

As an example, in a case where an evaluation function parameter P is related to an evaluation function f $_{evaluation}$ for outputting the stiffness characteristic, the evaluation function parameter P may include a parameter value (a value designating how subdivided a generated mesh is) to be inputted to a variable related to mesh setting for meshing a structure for analysis, a parameter value (a value indicating a load direction and a load force) to be inputted to a variable related to setting of the boundary conditions (constraint conditions and load conditions), and/or the like.

Here, an example of a series of processing defined by the evaluation function f $_{evaluation}$ will be described by using a case in which processing of obtaining a homogenized lattice as a linear elastic body is defined as an example. In this case, the evaluation function f$_{evaluation}$ defines a series of processing 1) to 6) described below:

1) a geometry is defined by using a geometry definition function and a geometry parameter that have been inputted;
2) for the defined geometry, a mesh is generated by using a mesh size and meshing algorithm that are designated by an evaluation function parameter;
3) a material defined by using a material definition function and a material parameter that have been inputted is associated with an element of the mesh;
4) for nodes of the mesh, nodes existing on a bounding box are automatically detected and a periodic boundary condition for automatically detecting for adding a periodicity required for homogenization is defined;
5) analysis is executed for six load cases required for the homogenization; and
6) elastic tensors (21 values) as a result of the homogenization is calculated from six analysis results.

(3) Design Variable Vector X

The "design variable vector X" includes, as a function related to a geometry, a material, and the like which are required to configure a structure, a label indicating the geometry definition function that defines the geometry of the structure, a geometry parameter (numerical value vector) to be substituted for one or a plurality of geometry variables included in the geometry definition function, a label indicating the material definition function that defines the element characteristic (material) of the structure, and a material parameter (numerical value vector) to be substituted for one or a plurality of material variables included in the material definition function as indicated below.
[1]

$$\vec{X} = \begin{pmatrix} label_{geometry} \\ \vec{param}_{geometry} \\ label_{material} \\ \vec{param}_{material} \end{pmatrix}$$

$label_{geometry}$ : Label character string of geometry definition function

$\vec{param}_{geometry}$ : Geometry parameter

$label_{material}$ : Label character string of material definition function

$\vec{param}_{material}$ : Material parameter

... (Equation 1).

The geometry definition function includes one or a plurality of geometry variables and, as an example, can be implemented in the form of a compiled binary file that describes processing to be executed by the control unit 130 of the design search apparatus 100 in order to generate the geometry of a structure defined by the geometry definition function. As an example, a case where a cuboid geometry is defined will be described. The geometry definition function in this case can be implemented in the form of a binary file in which a program that describes processing of "receiving parameter values of variables indicating lengths in the x, y, and z directions, respectively, and defining a cuboid having dimensions specified by those parameter values in a brep data structure by using a CAD library" is compiled.

In the same manner, the material definition function includes one or a plurality of material variables and can be implemented in the form of a compiled binary file that describes processing to be executed by the control unit 130 of the design search apparatus 100 in order to determine the element characteristic (material) of a structure defined by the material definition function. As an example, a case where an isotropic material is defined will be described. The material definition function in this case can be implemented in the form of a binary file in which a program that describes processing of "receiving parameter values of variables indicating a Young's modulus, a Poisson's ratio, and a density, respectively, and defining a characteristic of an isotropic material specified by those parameter values in a specific data structure" is compiled.

Each of the geometry definition function and the material definition function is stored in association with a "label" representing each function in the database 122 as in data structures indicated in Tables 4 and 5 below, for example. By selecting, on the user interface (UI) screen displayed on the display 142, a geometry definition function label and a material definition function label from the tables by using the input device 144, the user of the design search apparatus 100 can generate a desired design variable vector X including the geometry definition function label and the material definition function label. Alternatively, in a case where the design search apparatus 100 is configured such that the geometry definition function and the material definition function can be inputted by script description, the user can describe a script by using the input device 144 to input the geometry definition function and the material definition function. The geometry definition function and the material definition function that are inputted in the above-described manner are preferably stored additionally in the geometry definition function table and the material definition function table, respectively, for later use.

[Table 4]

| Geometry definition function label | Geometry definition function $f_{geometry}$ |
| --- | --- |
| Label_$f_{geometry\ 1}$ | $f_{geometry\ 1}$ |
| Label_$f_{geometry\ 2}$ | $f_{geometry\ 2}$ |
| Label_$f_{geometry\ 3}$ | $f_{geometry\ 3}$ |
| Label_$f_{geometry\ 4}$ | $f_{geometry\ 4}$ |
| Label_$f_{geometry\ 5}$ | $f_{geometry\ 5}$ |

(continued)

| Geometry definition function label | Geometry definition function $f_{geometry}$ |
|---|---|
| ... | ... |

[Table 5]

| Material definition function label | Material definition function $f_{material}$ |
|---|---|
| Label_$f_{material\ 1}$ | $f_{material\ 1}$ |
| Label_$f_{material\ 2}$ | $f_{material\ 2}$ |
| Label_$f_{material\ 3}$ | $f_{material\ 3}$ |
| Label_$f_{material\ 4}$ | $f_{material\ 4}$ |
| Label_$f_{material\ 5}$ | $f_{material\ 5}$ |
| ... | ... |

Further, a design variable vector X generated by defining a geometry definition function and a material definition function as described above is preferably stored in association with a label (character string) corresponding thereto in the database 122 as in a data structure indicated in Table 6. This allows the control unit 130 of the design search apparatus 100 to read a design variable vector X composed of a specific geometry definition function and a specific material definition function from the database 122 and utilize the design variable vector X. More specifically, when the control unit 130 of the design search apparatus 100 accesses the data structure indicated in Table 6, a geometry definition function corresponding to a geometry definition function label associated with a certain design variable vector label is specified by referring to the data structure in Table 4, and a material definition function corresponding to a material definition function label associated with the design variable vector label is specified is specified by referring to the data structure in Table 5.

[Table 6]

| Design variable vector label | Geometry definition function label | Material definition function label |
|---|---|---|
| Label_$X_1$ | Label_$f_{geometry\ 1}$ | Label_$f_{material\ 1}$ |
| Label_$X_2$ | Label_$f_{geometry\ 2}$ | Label_$f_{material\ 2}$ |
| Label_$X_3$ | Label_$f_{geometry\ 3}$ | Label_$f_{material\ 3}$ |
| Label_$X_4$ | Label_$f_{geometry\ 4}$ | Label_$f_{material\ 4}$ |
| Label_$X_5$ | Label_$f_{geometry\ 5}$ | Label_$f_{material\ 5}$ |
| ... | ... | ... |

The geometry definition function label, the material definition function label, and the design variable vector label can each be represented by a character string. The character string may be readable by the control unit 130 of the design search apparatus 100, and is configured by listing words and numbers that can be recognized by a person, by encoding with a random character sequence that is not understandable to a person, or the like. The design search apparatus 100 is configured such that when the design search apparatus 100 reads character string labels thereof, the design search apparatus 100 can reproduce the corresponding geometry definition function, material definition function, and design variable vector.

The geometry parameter includes a geometry parameter value set composed of one or a plurality of "variable types", which are information indicating one or a plurality of geometry variables included in the geometry definition function, for which a geometry parameter value is substituted, and one or a plurality of geometry parameter values that is substituted for the one or plurality of variable types, respectively. For example, in a case where the geometry definition function includes three geometry variables, three variable types indicating those three geometry variables and three geometry parameter values to be substituted for the variable types, respectively, are stored as one geometry parameter value set in the geometry parameter. Further, depending on the number of data sets to be generated, a plurality of geometry parameter value sets is stored as part of the design variable vector X in the data structure indicated in Table 1.

A plurality of geometry parameter value sets is stored in the geometry parameter as described below. In the example below, n groups of geometry parameter value sets are stored in the geometry parameter, as in (Xa_1a, Xb_1b, Xc_1c) with three variable types Xa, Xb, and Xc and three parameter values a1, b1, and c1 associated therewith, respectively, as a group of geometry parameter value sets.

[2]

$$\text{Geometry parameter}\ (\text{numerical value vector}) \left\{ \begin{array}{lll} (X a\_1 a, & X b\_1 b, & X c\_1 c) \\ (X a\_2 a, & X b\_2 b, & X c\_2 c) \\ (X a\_3 a, & X b\_3 b, & X c\_3 c) \\ ( \quad \dots \quad , & \dots \quad , & \dots \quad ) \\ (X a\_n a, & X b\_n b, & X c\_n c) \end{array} \right.$$

$$\dots \text{(Equation 2).}$$

Each parameter value of the plurality of geometry parameter value sets may be generated by the user inputting the each parameter value individually. Alternatively, the user may input a range of numerical values to be substituted for the geometry variables, respectively, and an interval value, and then each parameter value of the plurality of geometry parameter value sets may be generated by the control unit 130 of the design search apparatus 100 according to the input. In the latter case, numerical values to be associated with the respective variable types of the respective groups may be randomly allocated and determined from generated numerical values by the control unit 130. At this time, a plurality of geometry parameter value sets may be generated for every combination of the generated numerical values. Alternatively, the number of geometry parameter value sets to be generated may be determined in advance and combinations of numerical values may be generated until the determined groups are reached.

Further, the material parameter includes a plurality of material parameter value sets composed of three variable types indicating one or two or more material variables included in the material definition function for which a material parameter value is substituted, and three material parameter values that are substituted for the variable types, respectively. For example, in a case where the material definition function includes three material variables, three variable types indicating the three material variables and three material parameter values to be substituted for the variable types, respectively, are stored as one material parameter value set in the material parameter. Then, depending on the number of data sets to be generated, a plurality of material parameter value sets is stored as part of the design variable vector X in the data structure indicated in Table 1.

A plurality of material parameter value sets is stored in the material parameter as described below. In the example below, n groups of material parameter value sets are stored in the material parameter as in $(X\alpha_{1a}, X\beta_{1b}, X\gamma_{1c})$ with three variable types $X\alpha$, $X\beta$, and $X\gamma$ and three parameter values a1, b1, and c1 associated therewith, respectively, as a group of material parameter value sets.

[3]

$$\text{Material parameter}\ (\text{numerical value vector}) \left\{ \begin{array}{lll} (X\alpha\_1 a, & X\beta\_1 b, & X\gamma\_1 c) \\ (X\alpha\_2 a, & X\beta\_2 b, & X\gamma\_2 c) \\ (X\alpha\_3 a, & X\beta\_3 b, & X\gamma\_3 c) \\ ( \quad \dots \quad , & \dots \quad , & \dots \quad ) \\ (X\alpha\_n a, & X\beta\_n b, & X\gamma\_n c) \end{array} \right.$$

$$\dots \text{(Equation 3).}$$

In the same manner as in the case of geometry parameter values, each parameter value of the plurality of groups of material parameters may be generated by the user inputting the each parameter value individually. Alternatively, the user may input a range of numerical values to be substituted for the material variables, respectively, and an interval value, and then each parameter value of the plurality of groups of material parameters may be generated by the control unit 130 of the design search apparatus 100 according to the input. In the latter case, numerical values to be associated with the respective variable types of the respective groups may be randomly allocated and determined from generated numerical values by the control unit 130. At this time, a plurality of material parameter value sets may be generated for every combination of the generated numerical values. Alternatively, the number of material parameter value sets to be generated may be determined in advance and combinations of numerical values may be generated until the determined groups are reached.

Here, specific examples of the geometry definition function, geometry parameter, material definition function, and material parameter which are included in the design variable vector X will be described.

1) Octet Truss Composed of Isotropic Material

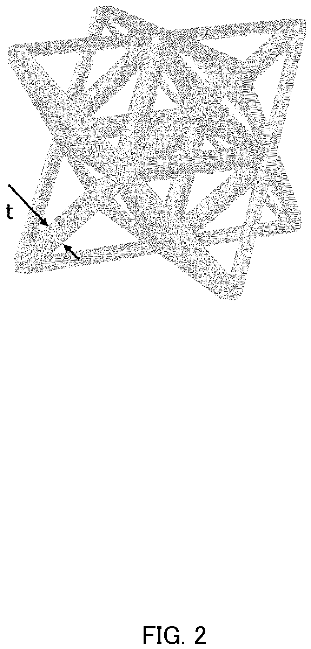

FIG. 2 illustrates an octet-truss structure. As an example, the design variable vector X illustrating a structure of an octet truss composed of an isotropic material includes the following information:

[4]

$$\vec{X} = \begin{pmatrix} "OctetTruss" \\ \vec{param}_{OctetTruss} \\ "Isotropic" \\ \vec{param}_{Isotropic} \end{pmatrix}$$

$$\vec{param}_{OctetTruss} = (r)$$

$r$ : Radius of circular cross section beam

$$\vec{param}_{Isotropic} = \begin{pmatrix} E \\ \rho \\ \nu \end{pmatrix}$$

$E$ : Young's modulus

$\rho$ : Density

$\nu$ : Poisson ratio

$$... \text{(Equation 4)}.$$

In the design variable vector X described above,

- "OctetTruss" is a label indicating a geometry definition function that defines the geometry (octet truss) of a structure;
- "$param_{OctetTruss}$ vector" is a geometry parameter (numerical value vector) composed of a plurality of geometry parameter value sets that includes a variable type indicating a radius r of a circular cross section beam, which is a geometry variable included in the geometry definition function and a variable that configures the octet truss, and one or a plurality of geometry parameter values associated therewith;
- "Isotropic" is a label indicating a material definition function that defines that an element property (material) of the structure is isotropic; and
- "$param_{Isotropic}$ vector" is a material parameter (numerical value vector) composed of a plurality of material parameter value sets that includes variable types indicating a Young's modulus E, a density $\rho$, and a Poisson ratio v, which are material variables included in the material definition function and are variables that determine an element characteristic (material) of the structure, and material parameter values associated therewith, respectively.

2) X-Shaped Hinge Composed of Orthotropic Material

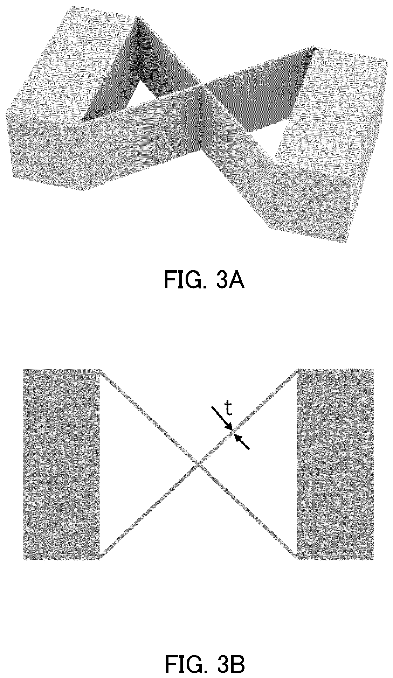

FIGS. 3A and 3B illustrate an X-shaped hinge structure. As an example, the design variable vector X indicating the structure of an X-shaped hinge composed of an orthotropic material includes the following information.

[5]

$$\vec{X} = \begin{pmatrix} "XHinge" \\ \overrightarrow{param}_{XHinge} \\ "Orthotropic" \\ \overrightarrow{param}_{Orthotropic} \end{pmatrix}$$

$$\overrightarrow{param}_{XHinge} = \begin{pmatrix} w \\ h \\ d \\ t \end{pmatrix}$$

$w$ : Width of structure

$h$ : Length of structure

$d$ : Thickness of structure

$t$ : Thickness of deformed beam

$$\overrightarrow{param}_{Orhtotropic} = \begin{pmatrix} \vec{E} \\ \rho \\ \vec{\nu} \end{pmatrix}$$

$\vec{E}$ : Elastic modulus in each direction
describing orthotropy

$\rho$ : Density

$\vec{\nu}$ : Each component of Poission ratio
describing orthotropy

... (Equation 5).

In the design variable vector X described above,

- "XHinge" is a label indicating a geometry definition function that defines the geometry (X-shaped hinge) of a structure;
- "param$_{XHinge}$ vector" is a geometry parameter (numerical value vector) composed of a plurality of geometry parameter value sets that includes variable types indicating a width w of the X-shaped hinge, a length h of the same structure, a thickness d of the same structure, and a thickness t of a deformed beam of the X-shaped portion, which are geometry variables included in the geometry definition function, and geometry parameter values associated therewith, respectively;
- "Orthotropic" is a label indicating a material definition function that defines that an element property (material) of the structure is orthotropic; and
- "param$_{XHinge}$ vector" is a material parameter (numerical value vector) composed of a plurality of material parameter value sets that includes variable types indicating an elastic modulus E of each direction (the x, y, and z directions) describing orthotropy, a density ρ, and a Poisson ratio v of each component describing orthotropy, which are material variables included in the material definition function, and material parameter values associated therewith, respectively.

It should be noted that the design variable vector X indicated above is only an example and may vary as appropriate depending on the geometric shape and element characteristic (material) of a structure to be formed.

(4) Function Variable Vector Y

The "function variable vector Y" is composed of a plurality of function parameter value sets including variable types indicating function variables, respectively, which are outputted as a result of application of the design variable vector X to the evaluation function $f_{evaluation}$, and function parameter values associated with those variable types, respectively. Examples of those function variables include stiffness, stress, vibration transmissibility, degree of isolation of displacement, external dimensions, and minimum dimensions. The function variable vector Y is the output of the evaluation function $f_{evaluation}$. Accordingly, when the evaluation function $f_{evaluation}$ is defined, the function variables outputted thereby are determined.

In particular, the "degree of isolation of displacement" here is represented by the ratio of the stiffness of a certain deformation mode group of a structure (for example, a first-order and second-order modes of deformation) to the stiffness of another deformation mode group (for example, a third-order mode of deformation and thereafter). The larger the value of this ratio, the harder deformation of a structure between the deformation mode groups described above occurs, that is, the higher the degree of isolation of displacement.

Data of the function variable vector Y are stored as described below. In the example below, n groups of function parameter value sets are stored in the function variable vector as in (Ya_1a, Yb_1b, Yc_1c, Yd_1d) with variable types Ya, Yb, Yc, and Yd indicating four function variables and four function parameter values a1, b 1, c1, and d1 associated therewith, respectively, as a group of function parameter value sets.

[6]

$$\text{Function variable vector Y (numerical value vector)} : \begin{cases} (\text{Y a\_1 a, Y b\_1 b, Y c\_1 c, Y d\_1 d}) \\ (\text{Y a\_2 a, Y b\_2 b, Y c\_2 c, Y d\_2 d}) \\ (\text{Y a\_3 a, Y b\_3 b, Y c\_3 c, Y d\_3 d}) \\ (\quad \ldots \quad , \quad \ldots \quad , \quad \ldots \quad , \quad \ldots \quad ) \\ (\text{Y a\_n a, Y b\_n b, Y c\_n c, Y d\_n d}) \end{cases} \qquad \ldots \text{(Equation 6)}.$$

Next, variable types and parameter values included in the function variable vector Y will be described.

1) Lattice Homogenized as Linear Elastic Body

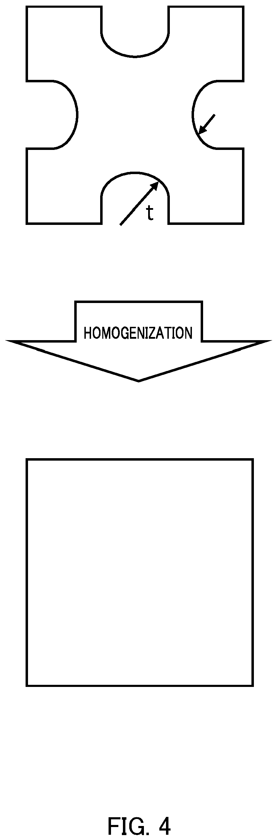

The function variable vector Y related to a homogenized lattice as a linear elastic body (see FIG. 4) includes the following variable types and parameter values.

[7]

$$\vec{Y} = \begin{pmatrix} \vec{C} \\ \rho_{relative} \\ thickness_{min} \end{pmatrix}$$

$\vec{C}$ : Vectors of 21 components of homogenized elastic modulus tensor

$\rho_{relative}$ : Effective density when viewed macroscopically as material

$thickness_{min}$ : Minimum wall thickness

$$\ldots \text{(Equation 7)}.$$

In the function variable vector Y described above,

- "C Vector" indicates a plurality of function parameter value sets including variable types indicating variables with respect to vectors of 21 components of an elastic modulus tensor of a homogenized lattice as a linear elastic body and parameter values associated therewith, respectively;
- "$\rho_{relative}$" indicates a function parameter value set including a variable type indicating a variable related to an effective density when the homogenized lattice as the linear elastic body is viewed macroscopically as a material, and a parameter value associated therewith; and
- "$thickness_{min}$" indicates a function parameter value set including a variable type indicating a variable related to the minimum wall thickness that the homogenized lattice as the linear elastic body can take, and a parameter value associated therewith.

2) Compliant Mechanism Evaluated as Hinge Spring

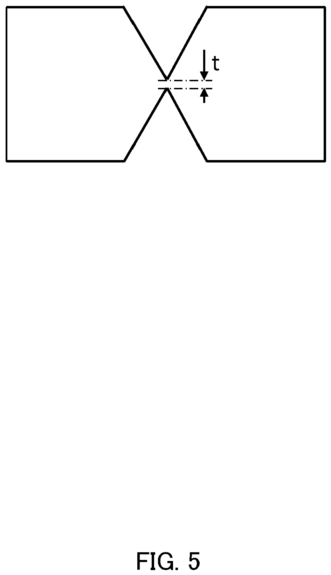

The function variable vector Y related to a compliant mechanism (see FIG. 5) evaluated as a hinge spring includes the following variable types and parameter values.
[8]

$$\vec{Y} = \begin{pmatrix} k \\ \theta_{max} \\ thickness_{min} \end{pmatrix}$$

$k$ : Stiffness as hinge spring

$\theta_{max}$ : Maximum bending angle

$thickness_{min}$ : Minimum wall thickness

... (Equation 8).

In the function variable vector Y described above,

- "k" indicates a function parameter value set including a variable type indicating a variable related to stiffness as the hinge spring of the compliant mechanism, and a parameter value associated therewith;
- "$\theta_{max}$" indicates a function parameter value set including a variable type indicating a variable related to the maximum bending angle of the hinge spring, and a parameter value associated therewith; and
- "thickness_{min}" indicates a function parameter value set including a variable type indicating a variable related to the minimum wall thickness that the compliant mechanism evaluated as the hinge spring can take, and a parameter value associated therewith.

3) Damping Member Evaluated as Six Degrees Of Freedom Spring

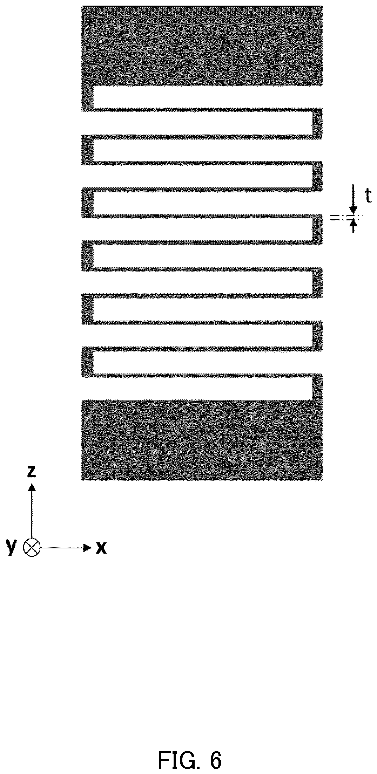

The function variable vector Y related to a damping members evaluated as a six degrees of freedom spring (see FIG. 6) includes the following variable types and parameter values.
[9]

$$\vec{Y} = \begin{pmatrix} \vec{k}_{tx} \\ \vec{k}_{ty} \\ \vec{k}_{tz} \\ \vec{k}_{rx} \\ \vec{k}_{ry} \\ \vec{k}_{rz} \\ \vec{T}_{tz} \\ thickness_{min} \end{pmatrix}$$

$\vec{k}_{tx}$ : Stiffness in the X direction

$\vec{k}_{ty}$ : Stiffness in the Y direction

$\vec{k}_{tz}$ : Stiffness in the Z direction

$\vec{k}_{rx}$ : Stiffness with respect to moment around X

$\vec{k}_{ry}$ : Stiffness with respect to moment around Y

$\vec{k}_{rz}$ : Stiffness with respect to moment around Z

$\vec{T}_{tz}$ : Vibration transmissibility (1000 dimensions) in the z-direction at every frequency of 1 to 1000Hz

$thickness_{min}$ : Minimum wall thickness

... (Equation 9).

In the function variable vector Y described above,

- "$k_{tx}$, $k_{ty}$, $k_{tz}$, $k_{rx}$, $k_{ry}$, $k_{rz}$" indicate a plurality of function parameter value sets including variable types indicating variables related to the stiffness in the x direction, the stiffness in the y direction, the stiffness in the z direction, the moment stiffness around the x-axis, the moment stiffness around the y-axis, and the moment stiffness around the z-axis, respectively, and parameter values associated therewith, respectively;
- "$T_{tz}$ vector" indicates a plurality of function parameter value sets including variable types indicating variables related to the vibration transmissibility (1000 dimensions) in the z-direction at every frequency of 1 to 1000Hz with a 1Hz increments, and parameter values associated therewith, respectively; and
- "$thickness_{min}$" indicates a function parameter value set including a variable type indicating a variable related to the minimum wall thickness that the damping member evaluated as the six degrees of freedom spring can take, and a parameter value associated therewith.

The variable types included in the function variable vector Y indicated above are only exemplary and may vary depending on the evaluation function f $_{evaluation}$ that defines the function variable vector Y to be outputted. The function variable vector Y may include variable types indicating variables related to various physical characteristics (mechanical, thermal, electric, acoustical, vibrational, magnetic characteristics, and the like) in addition to the examples described above.

Here, the relation between geometry and material parameters in each design variable vector X stored in the data structure in Table 1 and each function variable vector Y associated with the each design variable vector X will be described.

Referring to the data set stored in the first row of the data structure in Table 1, the data set includes a design variable vector $X_1$ and a function variable vector $Y_1$ in a state of being associated with each other. Here, in a case where it is configured such that the design variable vector $X_1$ includes the geometry parameter exemplified in Equation 2 described above and the material parameter exemplified in Equation 3, and the function variable vector $Y_1$ is composed of the function variable vector exemplified in Equation 6, the geometry parameter and material parameter in the design variable vector $X_1$ included in the data set described above and the function parameter value set are associated with each other as illustrated in Table 7 below and stored in the data structure of Table 1.

[Table 7]

| Design variable vector $X_1$ | | Function variable vector $Y_1$ |
|---|---|---|
| Geometry parameter | Material parameter | |
| (Xa_1a, Xb_1b, Xc_1c) | (X$\alpha$_1a, X$\beta$_1b, X$\gamma$_1c) | (Ya_1a, Yb_1b, Yc_1c, Yd_1d) |
| (Xa_2a, Xb_2b, Xc_2c) | (X$\alpha$_2a, X$\beta$_2b, X$\gamma$_2c) | (Ya_2a, Yb_2b, Yc_2c, Yd_2d) |
| (Xa_3a, Xb_3b, Xc_3c) | (X$\alpha$_3a, X$\beta$_3b, X$\gamma$_3c) | (Ya_3a, Yb_3b, Yc_3c, Yd_3d) |
| ... | ... | ... |
| (Xa_na, Xb_nb, Xc_nc) | (X$\alpha$_na, X$\beta$_nb, X$\gamma$_nc) | (Ya_na, Yb_nb, Yc_nc, Yd_nd) |

This case will be described with reference to the example of the data of the first row of Table 7. It can be seen that the geometry parameter value set (Xa_1a, Xb_1b, Xc_1c) and the material parameter value set (X$\alpha$_1a, X$\beta$_1b, X$\gamma$_1c), which are inputted to the respective variables of the design variable vector $X_1$, and the function parameter value set (Ya_1a, Yb_1b, Yc_1c, Yd_1d) in the function variable vector $Y_1$ outputted according to the design variable vector $X_1$ to which the geometry parameter value set (Xa_1a, Xb_1b, Xc_1c) and the material parameter value set (X$\alpha$_1a, X$\beta$_1b, X$\gamma$_1c) have been inputted, as well as the evaluation function f $_{evaluation\ 1}$ and the evaluation function parameter $P_1$, are associated with each other in the data set. In the same manner, the geometry parameter value set and the material parameter value set, which are inputted to the respective variables of the design variable vector X, and the function parameter value set in the function variable vector Y outputted based on the geometry parameter value set and the material parameter value set as well as according to the evaluation function f $_{evaluation}$ and the evaluation function parameter P are associated with each other in each data in the second and subsequent rows of Table 7.

Note that, in particular as indicated in the sixth example from the top in the data structure in Table 1, a plurality of evaluation functions f $_{evaluation}$ and a plurality of evaluation function parameters P may be associated with one design variable vector X. As a result, a plurality of function variable vectors Y corresponding to different evaluation functions f $_{evaluation}$ and different evaluation function parameters P, respectively, is stored with respect to the one design variable vector X.

As described above, for various combinations of the design variable vector X and the function variable vector Y, the geometry/material parameter value sets inputted to the design variable vector X and the function parameter value set of the function variable vector Y outputted, based on the design variable vector X to which the parameters of the geometry/material parameter value sets have been inputted, as well as according to the evaluation function f $_{evaluation}$ and the evaluation function parameter P, are accumulated in a state of being associated with each other in the database 122 of the storage unit 120 of the design search apparatus 100. Some or all of variables included in a plurality of design variable vectors X stored in the database 122 may be common in some or all of the respective design variable vectors X. In the same manner, some or all of variables included in a plurality of function variable vectors Y stored in the database 122 may be common in some or all of the respective function variable vectors Y.

The control unit 130 of the design search apparatus 100 can extract parameter values related to common variables by filtering or grouping parameter values including common variable labels from a plurality of data sets stored in the data structures indicated in Tables 1 and 7 in the database 122. Thus, it is possible to collectively refer to common parameter values belonging to different data sets, and it is possible to collectively search for, for example, a design variable satisfying a requirement for a function variable selected by the user, for various different structures.

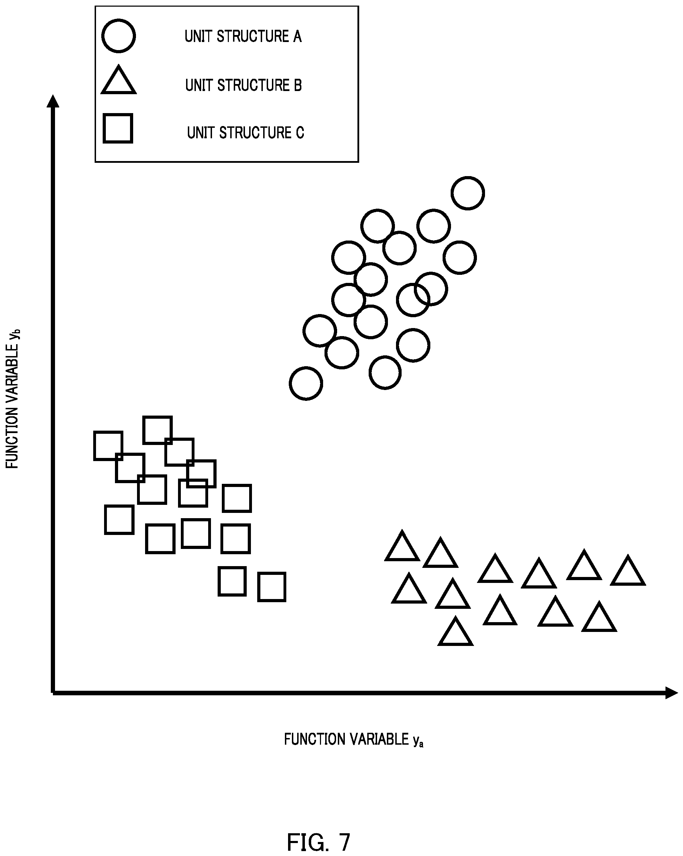

FIG. 7 is a schematic diagram illustrating distribution of various structures corresponding to two function variables of a first function variable and a second function variable, which may be generated by the design search apparatus 100 of the present embodiment. In FIG. 7, various structures corresponding to a first function variable $Y_a$ and a second function variable $Y_b$ which are extracted from data sets stored in the database 122 of the storage unit 120 of the design search apparatus 100 are mapped. In FIG. 7, the horizontal axis is the first function variable $Y_a$, and the vertical axis is the second function variable $Y_b$. Such a diagram is displayed on the display 142 of the design search apparatus 100.

In the example indicated in FIG. 7, the user can search for a structure, which satisfies a desired function requirement, and a design parameter value, that the structure has, in a function space composed of the two function variables $Y_a$ and $Y_b$. It is understood from the distribution illustrated in FIG. 7 that as a rough tendency, for example, a structure A is a structure in which the first function variable $Y_a$ and the second function variable $Y_b$ are in direct proportion, a structure B is a structure in which the values of the first function variable $Y_a$ are relatively large and the values of the second function variable $Y_b$ are relatively small, and a structure C is a structure in which both the values of the two function variables $Y_a$ and $Y_b$ are small. Further, when the user points a sample point on the display 142 of the design search apparatus 100 by using the input device 144, the values of the function variables $Y_a$ and $Y_b$ of the point and the values of various design parameters that exhibit those values of the function variables $Y_a$ and $Y_b$ are displayed on the display 142. In the above-described manner, the user can search for a structure, which satisfies a desired functional requirement, and a design parameter thereof. Further, in a case where interpolation between sample points thereof is performed, when pointing is performed between the sample points on the display 142 by using the input device 144, the parameter values of the function variables $Y_a$ and $Y_b$ at the pointed points and the values of various design parameters that exhibit those values of the function variables $Y_a$ and $Y_b$ are displayed on the display 142.

Subsequently, a method of constructing a design function space by the design search apparatus 100 of the present embodiment will be described with reference to FIG. 8 or the like. FIG. 8 is a flowchart illustrating a method of constructing a design function space by the design search apparatus of the present embodiment.

In the method of constructing a design function space by the design search apparatus 100 of the present embodiment, the control unit 130 of the design search apparatus 100 first generates a data region, which stores data of a newly constructed design function space, in the data structure with the design function data indicated in Table 1 (step S100).

In step S 100, when the control unit 130 of the design search apparatus 100 detects that the user has inputted an instruction to start processing of constructing a design function space by using the input device 144 of the input/output unit 140, the control unit 130 generates a data region for storing new design function data in the data structure stored in the database 122 of the storage unit 120. Specifically, the control unit 130 adds, as a data region for the new design function data, a "row" to the data structure of Table 1 stored in the database 122.

Next, the control unit 130 of the design search apparatus 100 defines the evaluation function $f_{evaluation}$ related to the design function space to be constructed (step S101). For the evaluation function $f_{evaluation}$, a requirement required to output a desired characteristic (the function variable vector Y) is defined.

In step S101, the control unit 130 of the design search apparatus 100 causes the display 142 of the input/output unit 140 to display a user interface (UI) screen for receiving the user's input related to a setting item of the evaluation function $f_{evaluation}$ by using the input device 144 of the input/output unit 140 and to receive an input by the user using the input device 144. The control unit 130 of the design search apparatus 100 reads an evaluation function setting item table as indicated in Table 5 from the database 122 of the storage unit 120, and presents setting items, which are included in the evaluation function setting item table, in the form of, for example, a pull-down menu, in the UI screen displayed on the display 142. The user can perform an input related to a setting item of the evaluation function $f_{evaluation}$ by selecting a desired setting item from setting items presented in the UI screen. Alternatively, in a case where the design search apparatus 100 is configured to allow a setting item of an evaluation function to be inputted by script description, the user can input a setting item by using the input device 144 to write a script.

For example, in a case where the stiffness characteristic of each unit of a structure as the function variable vector Y is desired to be acquired as in an example described above, the setting items to be defined in an evaluation function $f_{evaluation}$ include mesh setting, boundary conditions (constraint conditions and load conditions), analysis software used in analysis and settings thereof (for example, as processing setting for obtaining the stiffness characteristic of each unit of a structure, setting of the function variable vector Y to be desired to be acquired is determined, such as the elastic modulus is obtained based on a force applied to the each unit of the structure and bending displacement/torsional displacement of the each unit).

The control unit 130 of the design search apparatus 100 generates an evaluation function $f_{evaluation}$ by the setting items being selected or inputted in the above-described manner, then generates a label composed of a character string representing the evaluation function $f_{evaluation}$ and stores the evaluation function $f_{evaluation}$ and the label in association with each other in the data structure of Table 3, and stores the label in the "evaluation function $f_{evaluation}$ label" in the data region generated in step S100 described above.

Next, the control unit 130 of the design search apparatus 100 sets an evaluation function parameter P to be substituted for each variable of the evaluation function $f_{evaluation}$ defined in the above-described manner (step S102).

In step S102, the control unit 130 of the design search apparatus 100 causes the display 142 of the input/output unit 140 to display a user interface (UI) screen for receiving the user's input related to an evaluation function parameter P by using the input device 144 of the input/output unit 140 and to receive an input by the user using the input device 144. The control unit 130 of the design search apparatus 100 causes the UI screen for asking parameter value to be inputted, which is are set for the respective variables of an evaluation function $f_{evaluation}$ represented by a label stored in the database 122 of the storage unit 120 in the above-described manner, to be displayed on the display 142. The user inputs the parameter values to be set for the respective variables in the UI screen by using the input device 144.

The control unit 130 of the design search apparatus 100 stores the parameter values, which are inputted in the above-described manner, in a state of being associated with label variables indicating variables of the evaluation function $f_{evaluation}$ in the "evaluation function parameter P" in the data region generated in step S100 described above.

Next, the control unit 130 of the design search apparatus 100 sets the design variable vector X related to the design function space to be constructed (step S103).

In step S103, the control unit 130 of the design search apparatus 100 causes the display 142 of the input/output unit 140 to display a user interface (UI) screen for receiving the user's input related to the function of the design variable vector X by using the input device 144 of the input/output unit 140, and to receive an input by the user using the input device 144.

The control unit 130 of the design search apparatus 100 reads a geometry definition function table as indicated in Table 2 and a material definition function table as indicated in Table 3 from the database 122 of the storage unit 120, and causes functions, which are included in those tables, to be presented in the form of, for example, a pull-down menu in the UI screen displayed on the display 142. The user can perform an input related to a geometry definition function and a material definition function, which constitute the design variable vector X, by selecting a desired function from those functions presented in the UI screen. Alternatively, in a case where the design search apparatus 100 is configured to allow a geometry definition function and a material definition function of the design variable vector X to be inputted by script description, the user can input a geometry definition function and a material definition function by using the input device 144 to write a script.

In addition, in step S103, the control unit 130 of the design search apparatus 100 causes the display 142 of the input/output unit 140 to display a user interface (UI) screen for receiving the user's input of a geometry parameter, which is inputted to a geometry variable of the geometry definition function inputted in the above-described manner, and a material parameter, which is inputted to a material variable of the material definition function inputted in the above-described manner, by using the input device 144 of the input/output unit 140, and to receive an input by the user using the input device 144. The user may individually input parameter values to be substituted for the respective variables in the UI screen or may input parameter values to be substituted for the respective variables by designating a range of numerical values and an increment value. In the latter case, when a variable to be inputted is related to, for example, dimensions, the range of numerical values may be designated as 1 mm to 10 mm and the increment value may be designated as 0.5 mm, for example. With this designation, a total of 19 parameter values (1.0 mm, 1.5 mm, 2.0 mm ..., 10.0 mm) per 0.5mm between 1 mm to 10 mm are inputted for variables thereof. By such an input, a plurality of geometry parameter value sets, which includes variable labels corresponding to the geometry variables of the geometry definition function and geometry parameter values associated with the variable labels, and a plurality of material parameter value sets, which includes variable labels corresponding to the material variables of the material definition function and material parameter values associated with the variable labels, are generated. Each number of parameter value sets for those parameter value sets to be generated can be determined in an appropriate manner according to how many sample points are obtained for evaluation.

The control unit 130 of the design search apparatus 100 stores the design variable vector X, which is set by selecting or inputting a geometry definition function and a geometry parameter as well as a material definition function and a material parameter in the above-described manner, in the "design variable vector X" in the data region generated in step S100.

Finally, the control unit 130 of the design search apparatus 100 acquires a data set based on the evaluation function $f_{evaluation}$ and the evaluation function parameter P, which are defined as described above, and the design variable vector X set as described above (step S104).

In step S104, the control unit 130 of the design search apparatus 100 calculates, based on the geometry definition function and the geometry parameter as well as the material definition function and the material parameter in the design variable vector X and according to the evaluation function $f_{evaluation}$ and the evaluation function parameter P, the function variable vector Y composed of a plurality of function parameter value sets corresponding to combinations of each geometry parameter value set and each material parameter value set in the design variable vector X.

For the calculation of a plurality of function parameter value sets of the function variable vector Y according to the evaluation function $f_{evaluation}$ and the evaluation function parameter P, an integrated computer program capable of calculating every function variable thereof may be constructed and used or computer programs that differ depending on function variables to be obtained may be used. Further, for the calculation of those function parameter value sets, commercially available analysis programs or analysis platforms may be used. For example, simulation-related software "Ansys (trademark)" provided by Ansys, Inc. in the United States, and "Grasshopper (trademark)", which is the plug-in tool of a three-dimensional modeling tool "Rhinoceros (trademark)" provided by AppliCraft, Co., Ltd., can be used as the analysis programs and analysis platforms.

The design variable vector X including the evaluation function $f_{evaluation}$ and the evaluation function parameter P which are used in the calculation, the geometry definition function and the geometry parameter, and the material definition function and the material parameter, and the function variable vector Y including one or a plurality of function parameter value sets calculated by applying the design variable vector X to the evaluation function $f_{evaluation}$ and the evaluation function parameter P are stored as a group of data sets in the data region in the data structure, which is indicated in Table 1, in the database 122. These data sets are stored in the data structure in Table 1 by the number of combinations of the evaluation function $f_{evaluation}$ and the evaluation function parameter P, the design variable vector X, and the function variable vector Y By repeatedly executing the processing in steps S100 to S104 described above for various combinations of the evaluation function $f_{evaluation}$, the evaluation function parameter P, and the design variable vector X, for which data sets are desired to be acquired, numerous data sets for various combinations of the evaluation function $f_{evaluation}$, the evaluation function parameter P, and the design variable vector X above with the function variable vector Y calculated based thereon are generated, and are stored and accumulated in the data structure of Table 1 in the database 122.

Thus, the construction method of a design function space by the design search apparatus 100 is completed.

As described above, according to the design search apparatus 100 of the present embodiment, it is possible to acquire numerous data sets for various combinations of the evaluation function $f_{evaluation}$ and the design variable vector X associated with the function variable vector Y calculated based thereon, and to store and accumulate the numerous data sets in the data structure having a predetermined format.

The user of the design search apparatus 100 can map accumulated design/function parameter values by extracting a data set including design/function parameter values, on which the user desires to focus in designing a structure and causing those design/function parameter values to be displayed as a sample point cloud in a design function space displayed on the display 122 of the design search apparatus 100. In a case where function parameter values are mapped, visualizing design parameter values associated with the function parameter values as well makes it possible to search for structure/function parameter values that satisfy a desired condition, not only for a specific structure, but also for different structures collectively. Further, it also is possible to search for the degree of freedom in design while changing parameter values, such as how a parameter value changes when another parameter value is changed or to what extent a parameter value can be changed for satisfying a desired condition in a state in which another parameter value is fixed.

Further, in the design search apparatus 100 of the present embodiment, the evaluation function $f_{evaluation}$, which defines an analysis condition, and the evaluation function parameter P are associated with the design variable vector X and the function variable vector Y and are stored and accumulated as a data set in the data structure of Table 1 in the database 122, and thus, information indicating based on what analysis condition the function variable vector Y is generated is also included in each data set. For this reason, in a case where a parameter value set of the function variable vector Y is desired to be acquired by analyzing an additional parameter value set of the design variable vector X under the same analysis condition, in a case where a data set is desired to be acquired by partially changing the analysis condition and performing analysis again, or the like, it is possible to acquire additional data by referring to an analysis condition included in a data set and reproducing or partially changing the analysis condition to use the analysis condition for analysis.

A method of searching for such design/function parameter values using a design function space constructed by the design search apparatus 100 will be described with reference to FIG. 9 or the like. FIG. 9 is a flowchart illustrating a method of searching for design/function parameter values by the design search apparatus of the present embodiment.

In the method of searching for design/function parameter values by the design search apparatus 100 of the present embodiment, the control unit 130 of the design search apparatus 100 first receives an input of selection of a variable for the searching (step S200).

When the control unit 130 of the design search apparatus 100 detects in step S200 that the user has inputted an indication to start processing of searching in a design function space by using the input device 144 of the input/output unit 140, the control unit 130 of the design search apparatus 100 causes the display 142 of the input/output unit 140 to display a user interface (UI) screen for receiving an input for the user to select a variable for the searching by using the input device 144. The control unit 130 of the design search apparatus 100 causes variable labels of various variables included in the design variable vector X and the function variable vector Y stored in the data structure, which is indicated in Table 1, stored in the database 122 of the storage unit 120, to be presented in the form of, for example, a pull-down menu in the UI screen displayed on the display 142. The user can select a variable(s) for the searching by selecting one or a plurality of variable labels from the various variable labels presented in the UI screen.

Next, the control unit 130 of the design search apparatus 100 extracts a plurality of data sets, with which the variable selected in step S200 is associated, from design function data stored in the data structure of Table 1 (step S201).

The variable for the searching is not necessarily included in every design variable vector X or every function variable vector Y in the design function data. Referring to an example of design function data stored in the data structure indicated in Table 1, the function variable vector $Y_2$ is included in the function variable vectors Y of the second and sixth rows of the data structure. Accordingly, in a case where a variable included in the function variable vector $Y_2$ is selected in step S200, the control unit 130 of the design search apparatus 100 extracts the data sets stored in the function variable vectors Y of the second and sixth rows of the data structure, which is indicated in Table 1, in the database 122. The extraction of data sets associated with a selected variable can be executed, for example, by the control unit 130 of the design search apparatus 100 filtering or grouping only data sets associated with the selected variable from design function data in the database 122.

Next, the control unit 130 of the design search apparatus 100 generates a design function space related to the variable selected in step S200 and causes the display 122 to display the design function space, and further extracts a plurality of parameter values related to the variable from a plurality of data sets, with which the variable is associated, and displays a plurality of sample points based on the parameter values (step S202).

The design function space to be generated is represented, for example, in two dimensions when two variables are selected, and in three dimensions when three variables are selected. As described above, the number of dimensions that represent a design function space may vary depending on the number of variables represented in the design function space. The variable selection may be a combination of at least one design variable selected from variables included in the design variable vector X and at least one function variable selected from variables included in the function variable vector Y, a combination of at least two design variables selected from variables included in the design variable vector X, a combination of at least two function variables selected from variables included in the function variable vector Y, or the like. The variable selection is performed in the above-described manner and the space generated based thereon will be referred to as a design function space. Accordingly, the "design function space" in the present disclosure includes every aspect of a space generated only by design variables, a space generated only by function variables, and a space generated by design and function variables.

The control unit 130 of the design search apparatus 100 sets coordinate axes for each selected variable and generates a design function space by those coordinate axes. For example, in a case where two variables are selected, the control unit 130 generates a two-dimensional design function space by setting the X-axis and Y-axis that correspond to those variables, respectively, and in a case where three variables are selected, the control unit 130 generates a three-dimensional design function space by setting the X-axis, Y-axis, and Z-axis that correspond to those variables, respectively. The control unit 130 preferably operates to allow a user input to set which variable is displayed on which coordinate axis.

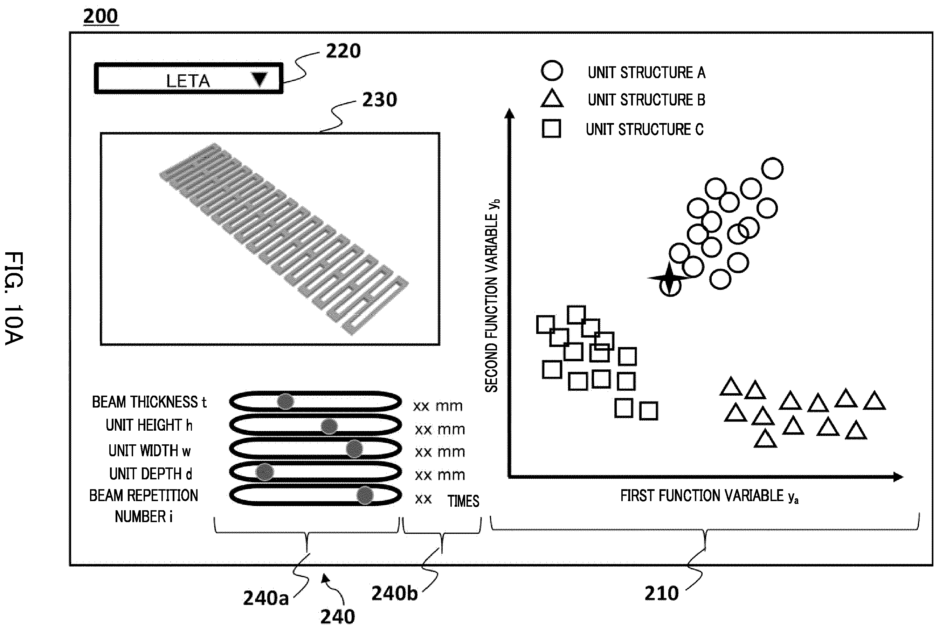

FIG. 10A is a schematic diagram illustrating an exemplary design search screen including a design function space. In the example illustrated in FIG. 10A, a design function space 210 indicated in a design search screen 200 is configured in two dimensions with a first function variable and a second function variable, the first function variable is assigned to the X-axis (horizontal axis), and the second function variable is assigned to the Y-axis (vertical axis).

The control unit 130 of the design search apparatus 100 causes a plurality of sample points based on a plurality of parameter values related to variables of the respective coordinate axes to be displayed on the design function space generated in the above-described manner.

In step S202, the control unit 130 of the design search apparatus 100 preferably causes each displayed sample point to be indicated on the design search screen 200 such that the each displayed sample point includes information on design variables (for example, a variable indicating the type of the structure) associated with the each displayed sample point. As described above, since each data set includes a plurality of geometry parameter value sets and a plurality of material parameter value sets in the design variable vector X and a plurality of function parameter value sets in the function variable vector Y, the control unit 130 of the design search apparatus 100 can acquire design parameter values associated with plotted sample points. For this reason, when the respective sample points are displayed, information on design variables associated with those sample points can be included. The information on design variables associated with sample points is information identified by a design parameter value set thereof and includes, for example, the type of structure, numerical value ranges of dimensions of the structure, and/or the like. The information on design variables is displayed distinguishably with symbols and colors which differ, for example, according to the type of a structure and a numerical value ranges of dimensions. In the example illustrated in FIG. 10A, the structures of the respective sample points are indicated with different symbols of "○", "△", and "□".

Next, the control unit 130 of the design search apparatus 100 performs approximation processing of a plurality of sample point clouds displayed in the design function space as an option (step S203).

In step S202 described above, a plurality of sample points is discretely displayed in the design function space. In a case where numerus data sets are extracted and numerous sample points are displayed, the distance between sample points becomes relatively close, and thus, it may be less necessary to perform approximation between sample points. In a case where the number of displayed sample points is small and the distance between sample points is relatively sparse, on the other hand, it is possible to search for design/function parameter values for positions, in which no sample points exist, by performing approximation between sample points.

In step S203, the control unit 130 of the design search apparatus 100 first receives a user input of whether approximation processing of sample point clouds is performed. When the control unit 130 receives a user input indicating that approximation processing of sample point clouds is performed, the control unit 130 executes approximation processing of sample point clouds. When the control unit 130 receives a user input indicating that approximation processing of sample point clouds is not performed, on the other hand, the control unit 130 skips the processing in step S203 and proceeds to step S204.

In a case where approximation processing of sample point clouds is executed, the control unit 130 of the design search apparatus 100 executes approximation processing of sample point clouds, as an example, for each group that includes sample points in which associated design variables (the type of the structure as an example) are common. This is because different associated design variables have different functional characteristics, which makes it difficult to perform approximation sample points with the different associated design variables.

The approximation processing includes, for example, generating an approximation function for each section between two adjacent sample points, for each of a plurality of sections configured with three or more sample points, or for a region configured with some or all of sample point clouds. The approximation function may be, for example, a polynomial function, or can be generated by using any other arbitrary approximation technique and based on sample point clouds. Further, the approximation function may involve interpolating or extrapolating sample point clouds. In a case where the approximation processing involves interpolating sample point clouds, the interpolation processing thereof involves interpolating discrete points, and thus, an interpolation technique suitable for interpolating discrete points can be used, such as polynomial interpolation (Lagrange interpolation, Newton interpolation, or the like) and spline interpolation.

In a case where the approximation processing of sample point clouds (step S203) described above is performed, in addition to or instead of a plurality of sample points displayed in the design function space in step S202, an approximation region configured with a design parameter value set and/or a function parameter value set approximated by the approximation function generated by the approximation processing may be displayed in the design function space. In this case, one of display aspects of 1) displaying a plurality of sample points in the design function space, 2) displaying a plurality of sample points and an approximation region obtained by approximating the plurality of sample points in the design function space, and 3) displaying only an approximation region in the design function space may be selected depending on a user input, for example.

Finally, the control unit 130 of the design search apparatus 100 causes various parameter values related to variables selected according to the user's search operation using the input device 144, the type of a structure, a three-dimensional representation, and/or the like to be displayed to thereby provide the user with the function of searching for various parameter values related to the selected variables (step S204).

In step S204, as an example, the control unit 130 of the design search apparatus 100 causes the design search screen 200 illustrated in FIG. 10A to display, in addition to the design function space 210 described above, a structure type display region 220 that indicates the type of a structure, a three-dimensional representation region 230 for a structure corresponding to the type selected and displayed in the structure type display region 220, and a parameter display region 240 including various parameter values of a design variable or a function variable and sliders for performing an input operation for changing the parameter values.

The structure type display region 220 is configured such that the type of a structure to be displayed can be selected according to a user input, for example, in the form of a pull-down menu. Further, the structure type display region 220 is configured to automatically display the type of a structure specified by, when the user points a sample point or a position between sample points by using the input device 144, a design parameter value set associated with the function parameter value of the pointed sample point or the pointed position between sample points. Such display processing of the structure type display region 220 is performed by the control unit 130 of the design search apparatus 100.

The three-dimensional representation region 230 displays a three-dimensional representation of a structure specified by, when the user points a sample point or a position between sample points in the design function space 210 by using the input device 144, a design parameter value set associated with the function parameter value of the pointed sample point or the pointed position between sample points. Alternatively, the three-dimensional representation region 230 displays a three-dimensional representation of a structure whose type, respective unit dimensions, and/or the like are specified by the respective design parameter values set by the user by operating each of sliders 240a corresponding to the design parameter values, respectively, by using the input device 144. Drawing processing required to display a structure as a three-dimensional representation or the like is performed by the control unit 130 of the design search apparatus 100.

As an example, various parameter values 240b displayed in the parameter display region 240 are specified by, when the user points a sample point or a position in an approximation region (such as between sample points) by using the input device 144, a parameter value set associated with the design parameter value or function parameter value of the pointed sample point or the pointed position in the approximation region. Alternatively, various parameter values 240b displayed in the parameter display region 240 are set by the user operating the sliders 240a corresponding to the respective variables by using the input device 144. The processing of specifying or setting various parameter values is performed by the control unit 130 of the design search apparatus 100.

Note that, the items of various parameters of a design variable or function variable displayed in the parameter display region 240 are not fixed, but can be changed as appropriate by the user using the input device 144. Various parameter items displayed in the parameter display region 240 are configured such that the parameter items to be displayed can be selected according to a user input, for example, in the form of a pull-down menu. The user can select various parameter items of a design variable or function variable displayed in the parameter display region 240 from the pull-down menu by using the input device 144.

The button of each of the respective sliders 240a displayed in the parameter display region 240 can be moved by the user to the left or right in the drawing in the range within each of the sliders 240a by using the input device 144. Each parameter value to be set can be increased or decreased according to the position of the button. As an example, the parameter values 240b decease when the buttons of the sliders 240a are moved to the left side in the drawing, and the parameter values 240b increase when the buttons of the sliders 240a are moved to the right side in the drawing. The user can set the respective parameter values 240b to be set by operating the respective buttons of the sliders 240a in the above-described manner by using the input device 144. Further, in a case where various parameter values 240b to be set are specified by, when the user points a sample point or a position between sample points by using the input device 144, a design parameter value set associated with the function parameter value of the pointed sample point or the pointed position between sample points, the buttons of the respective sliders 240a are displayed in positions in the sliders 240a corresponding to the magnitude of the parameter value 240b having been specified. Drawing processing of each slider or the like is also performed by the control unit 130 of the design search apparatus 100.

Note that, information that can be displayed on the design search screen 200 is not limited to the design function space 210 and the respective regions 210, 220, 230, 240 as described above. In place of or in addition to the above information, other information (for example, line drawing indicating a frequency characteristic, or the like) may be displayed on the design search screen 200.

On the design search screen 200 displayed in the above-described manner, the user can search for design/function parameter values related to a selected variable, for example, by a first or second operation described below.

(1) Operation in which the user points a sample point or a position in an approximation region such as between sample points in the design function space 210 by using the input device 144 (First Operation)

By this operation, the type and respective unit dimensions of a structure satisfying a design requirement or function requirement for the structure are specified by a parameter value set associated with the parameter value of the pointed sample point or the pointed position in an approximation region and are displayed on the design search screen 200. Thus, the user can acquire the type of a structure, which realizes a desired function, respective unit dimensions thereof, and/or the like, and can obtain the structure, which realizes the desired function, by designing and producing the structure based on the aforementioned pieces of information.

Further, since sample points associated with various types of structures are displayed collectively in the design function space 210 of the design search screen 200, the user can search for a structure satisfying a desired function, not for each structure but across a plurality of structures.

The first operation will be described with reference to the example illustrated in FIG. 10A. FIG. 10A illustrates a state in which the user is pointing at a sample point in the design function space 210 with a cross pointer by using the input device 144. At this time, the type of a structure satisfying the function is specified as "LETA" as a structure A by a design parameter value set associated with the function parameter value of the pointed sample point and the type is indicated in the structure type display region 220, and a three-dimensional representation in view of the respective unit dimensions or the like of the structure corresponding to the sample point is indicated in the three-dimensional representation region 230. Further, the respective unit dimensions or the like of the structure are displayed in the sliders 240a and the parameter values 240b. Note that, information on an evaluation function $f_{evaluation}$ label and an evaluation function parameter P, which are associated with the pointed sample point, may also be displayed in the design search screen 200.

(2) Operation in which the user sets each parameter value by using the input device 144 (Second Operation)

According to this operation, for example, the user specifies a structure, which the user desires to search for, and respective unit dimensions thereof in advance and sets each design parameter value, and thus, the user can search for a function parameter value that satisfies a setting condition for the each design parameter value. In this case, in the design function space 210, for example, sample points having a function parameter value that satisfies the setting condition are displayed with highlight or only those sample points are selectively displayed. Accordingly, contrary to the first operation described above, this second operation makes it possible to search for a function parameter value that satisfies a setting condition with a design variable as an axis.

The second operation will be described with reference to the example illustrated in FIG. 10A. FIG. 10A illustrates a state in which the user selects the type "LETA" of a structure in the structure type display region 220 by using the input device 144 and specifies respective unit dimensions or the like of the structure in the sliders 240a and the parameter values 240b, and a three-dimensional representation in view of the respective unit dimensions or the like of the structure is displayed in the three-dimensional representation region 230. As a result, a sample point corresponding to a function parameter value that satisfies a design parameter value set in the above-described manner is displayed with highlight (displayed with highlight in brightness, color, and/or the like which are different from those of other sample points) in the design function space 210 with a cross pointer.

In the second operation, by fixing one or some of design parameter values among several design parameter values, which can be set in the sliders 240a, and sequentially changing the remaining design parameter values, it is also possible to search for a function parameter value that satisfies the setting condition for the design parameter values. Thus, it is possible to search whether there may be a structure satisfying a targeted functional requirement, for example, by changing, in a state in which one or some of design parameter values are fixed according to a certain constraint condition, the remaining design parameter values having the freedom in design. In a case where a function parameter value is searched while sequentially changing design parameter values in the above-described manner, a three-dimensional representation of a structure displayed in the three-dimensional representation region 230 of the design search screen 200 is preferably sequentially changed in real time according to the design parameter values to be changed. Specifically, for example, when a design parameter value related to the dimensions of a portion of a structure is changed, processing by the control unit 130 is preferably performed such that the geometry of the portion of the structure, which is represented three-dimensionally, changes according to the change in the dimensions.

Note that, although a case where a design parameter value is set as a constraint condition and a function parameter value satisfying the setting condition is searched has been described above as an example, what can be set as a constraint condition in the second operation is not limited to a design parameter value. In the second operation, it is also possible to set a design parameter value and/or a function parameter value as a constraint condition and search for a design parameter value and/or a function parameter value that satisfies/satisfy the setting condition.

As described above, the design search apparatus 100 of the present embodiment of the control unit 130 is configured to set a constraint condition for one or a plurality of design variables and/or one or a plurality of function variables with a user input operation as described in the first or second operation above, specify a design parameter value set and/or a function parameter value set that satisfies/satisfy the constraint condition, and cause information on the design parameter value set and/or the function parameter value set to be presented.

As a result of a search for design/function parameter values related to a selected variable as described above, the user can recognize, by analyzing distribution of sample points displayed in the design function space 210, that there is no structure that satisfies the design/function requirement for the structure in a certain region of the design function space, for example. In this case, a sample point that may satisfy such a design function space is additionally generated, and thus, it is preferably configured such that for one, some or all of variables of the design variable vector X, one or a plurality of design parameter value sets to be additionally analyzed are inputted to the design search apparatus 100, the design search apparatus 100 is caused to output one or a plurality of function parameter value sets of the function variable vector Y that is outputted correspondingly, data sets including the one or plurality of design parameter value sets and the one or plurality of function parameter value sets are additionally stored in the database 122, and a sample point based on those additional data sets can also be displayed in the design function space. Thus, it is possible to additionally generate a structure that fills a design function space (satisfies design/function requirements).

The input(s) of one or a plurality of design parameter value sets to be additionally analyzed as described above can be performed by, for example, the user instructing "start of additional analysis" on the design search screen 200 by using the input device 144 and subsequently by the user inputting a range of design parameter values to be additionally analyzed for one, some or all design variables to the sliders 240a or the parameter values 240b. Such processing is performed by the control unit 130 of the design search apparatus 100.

Alternatively, a search for design/function parameter values related to a selected variable may result in a case where more detailed analysis of a structure of one or a plurality of sample points is desired to be obtained. In this case, for example, it is possible to additionally acquire a data set that makes it possible to further search for design/function parameter values, by changing part of requirements for the evaluation function parameter P stored in the data structure of Table 1 (such as subdividing a mesh more) and performing the sample point cloud acquisition processing (step S 104 of FIG. 8) again for data of the targeted sample points.

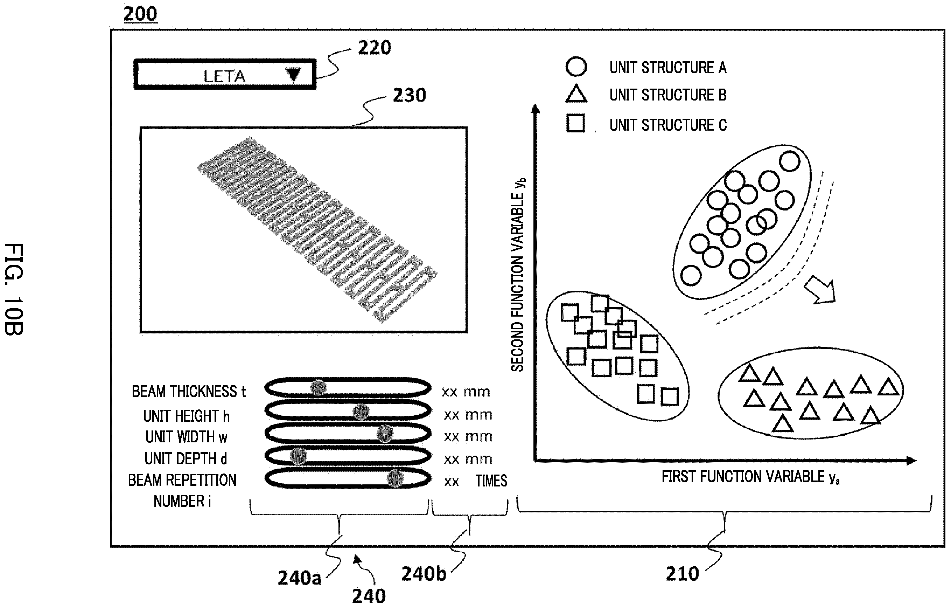

Further, as an example, the control unit 130 of the design search apparatus 100 may be configured to delimit a boundary of clouds of sample points, which have a common associated design variable (for example, the type of a structure), for each group including the sample points (see FIG. 10B). Such a boundary can be delimited by, for example, processing of obtaining a convex curve of a convex set composed of those sample point clouds. Inside such a boundary, it is possible to search for design/function parameter values since interpolation between sample points is performed as described above, but there is a case where a searchable region is desired to be extended outside the boundary. In this case, the boundary can be expanded and the searchable region can be extended by causing the control unit 130 of the design search apparatus 100 to execute arbitrary optimization processing such as a DFP method.

Further, in the example described with reference to FIG. 10A, sample point clouds are indicated with the different symbols of "∘", "△", and "□" for each type of structures. In contrast, in a case where it is sufficient to indicate information on how sample points are distributed in the design function space 210 or how the design function space 210 is filled with sample point clouds, sample points of every structure may be indicated with the same symbol without distinguishing the types of these structures.

Further, in a case where it is sufficient to present distribution of sample points in the design function space 210, or the like, information of the structure type display region 220, the three-dimensional representation region 230, and the parameter display region 240 may not be presented. Alternatively, only the external dimensions of a structure corresponding to a sample point may be presented (the type and geometry of the structure are not presented) in the three-dimensional representation region 230 or the parameter display region 240.

As described above, according to the method of searching for design /function parameters by the design search apparatus 100 of the present embodiment, the user can perform a search while visually comparing analysis results under various conditions for various structures, and thus, the user can specify a structure capable of realizing a desired function and respective unit dimensions thereof with conviction.

Further, according to the method of searching for design /function parameters by the design search apparatus 100 of the present embodiment, various design variables and function variables are analyzed in advance, a design function space for a variable desired by the user is generated by using a data set accumulated in the database 122, and a sample point is displayed and visualized in the design function space, and thus, it is not necessary to perform new analysis processing for each processing of generating a design function space and displaying a sample point. Accordingly, it is possible to search for design/function parameter values that satisfy a desired requirement can with quick readiness.

(Variations)

Subsequently, variations of the present embodiment will be described.

[Variation 1]

When a certain structure is designed, production constraints imposed for producing the structure (for example, minimum wall thickness dimensions that allow the structure to be produced by mold molding, or the like) and/or spatial constraints allowed for accommodating, attaching or the like of the structure (respective unit dimensions of the structure are determined in advance for accommodating the structure in a predetermined arrangement space, the maximum dimensions are determined, or the like) may have been known in advance. When sample points corresponding to those production constraints are also displayed in the design function space 210 when searching for design/function parameter values that satisfy a desired requirement, the sample points may become rather "noise" and may be an obstacle to the user in search or cause inconvenience. Accordingly, only design/function parameter values (sample points) that satisfy a desired requirement are preferably displayed in the design function space 210 in a state in which the above-described unnecessary information is eliminated in advance. Alternatively, it may be necessary to search for design/function parameter values (sample points) that satisfy a desired constraint condition in an arbitrary viewpoint.

Given the above, the present variation provides the design search apparatus 100, which displays, in the design function space 210, only design/function parameter values (sample points) that satisfy a desired requirement, and a method of searching for design/function parameter values by using the design search apparatus 100.

The present variation includes, when a variable for the searching is selected in step S200 in FIG. 9, setting a numerical value range of parameter values that need to be visualized for the selected variable.

When the control unit 130 of the design search apparatus 100 detects that the user has inputted an indication to start processing of searching in a design function space by using the input device 144 of the input/output unit 140, the control unit 130 of the design search apparatus 100 causes the display 142 of the input/output unit 140 to display a user interface (UI) screen for receiving an input for the user to select a variable for the searching by using the input device 144. The control unit 130 of the design search apparatus 100 causes various variables included in the design variable vector X and the function variable vector Y of the design function data, which is indicated in Table 1, stored in the database 122 of the storage unit 120, to be presented in the form of, for example, a pull-down menu in the UI screen displayed on the display 142. The user can select a variable(s) for the searching by selecting one or a plurality of variables from the various variables presented in the UI screen.

The control unit 130 of the design search apparatus 100 receives the selection of a variable for the searching in the above-described manner, and then causes the display 142 to display a UI screen for receiving an input of a numerical value range of parameter values that are visualized for each selected variable. In the displayed UI screen, the user inputs, by using the input device 144, a numerical value range of parameter values that are visualized for each variable.

Next, the control unit 130 of the design search apparatus 100 in the present variation extracts only a data set including the parameter values in the numerical value ranges set in the above-described manner when data sets associated with the selected variable are extracted in S201 in FIG. 9.

Accordingly, the control unit 130 of the design search apparatus 100 in the present variation causes only sample points of the parameter values in the numerical value range set in the above-described manner to be displayed when sample points are displayed in the design function space in step S202 in FIG. 9.

As described above, according to the present variation, only design/function parameter values (sample points) that satisfy a desired requirement can be displayed in the design function space 210, and thus, it is possible to search for necessary design/function parameters more efficiently by eliminating information that is not necessary for a search in advance.

Note that, although an example in which a numerical value range of parameter values that are visualized is inputted has been described above, it may be conversely configured such that a numerical value range of parameter values that are not visualized is inputted. In this case, only a data set including parameter values other than a set numerical value range is extracted, and only sample points of parameter values other than those in the numerical value range set in the above-described manner are displayed.

Further, it is also possible to set a desired constraint condition for searching for design/function parameter values (sample points) by, for example, setting an equality constraint or inequality constraint for parameter values of one or a plurality of certain variables. The control unit 130 of the design search apparatus 100 is configured to be capable of setting such a constraint condition according to a user input using the input device 144.

[Variation 2]

In the design search apparatus 100 of the present embodiment, a data set including various design parameter values and various function parameter values obtained by analysis in advance is accumulated in the database 122. For this reason, according to the design search apparatus 100 of the present embodiment, the user can perform a multifaceted search by repeatedly searching for design/function parameter values while selecting various variables. At this time, it is possible to narrow down design/function parameter values that satisfy a desired requirement by referring to a result of one search in the next search.

Given the above, the present variation provides the design search apparatus 100, which makes it possible to refer to a result of one search in the next search when design/function parameter values are repeatedly searched, and a method of searching for design/function parameter values by using the design search apparatus 100.

The present variation includes selecting, when the parameter values of selected variables are searched in step S204 in FIG. 9, a desired numerical value range related to the parameter values of those variables and storing the selected numerical value range in the storage unit 120.

The control unit 130 of the design search apparatus 100 in the present variation is configured to cause parameter values related to selected variables according to the user's search operation by using the input device 144 to be displayed and receive an input of a desired numerical value range related to parameter values of those variables in step S204 in FIG. 9.

The control unit 130 is configured to receive the following user input related to a numerical value range of variables by the input device 144.

Firstly, the parameter values of the respective variables are designated by operating the sliders 240a in the parameter display region 240 of the design search screen 200 illustrated in FIG. 10A by using the input device 144 and a numerical value range related to each of the inputted parameter values (such as only a value equal to the parameter value (equality constraint), and a numerical value range that is equal to or less than the parameter value, equal to or greater than the parameter value, or between two parameter values (inequality constraint)) is designated by arbitrary input processing.

Secondly, parameter values are directly inputted to the columns of the parameter values 240b in the parameter display region 240 of the design search screen 200 illustrated in FIG. 10A by using the input device 144, and further a numerical value range related to each of the inputted parameter values as described above is designated by arbitrary input processing.

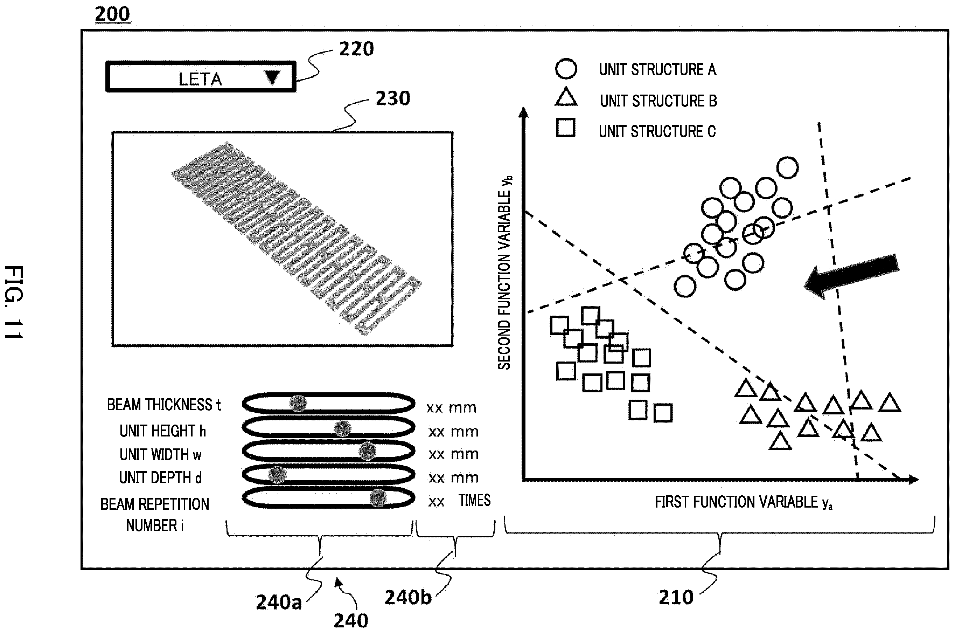

Thirdly, in the design function space 210 of the design search screen 200 illustrated in FIG. 10A, parameter values for the respective variables are inputted by using the input device 144, and further a numerical value range related to each of the parameter values (equal to or less than the parameter value, equal to or greater than the parameter value, or the like) is designated by arbitrary input processing. Parameter values and a range thereof can be inputted by, for example, drawing one or a plurality of line segments in the design function space 210 by using the input device 144 and indicating a region delimited by the line segment(s) by using the input device 144. As an example, FIG. 11 illustrates a state in which parameter values are inputted with three line segments and a region surrounded by the line segments is selected as a numerical value range of the parameter values.

The parameter values of the respective variables and the numerical value ranges thereof, which are inputted in the above-described manner, are at least temporarily stored in the storage unit 120 of the design search apparatus 100. At this stage, the control unit 130 of the design search apparatus 100 may cause only sample points, which are included in a data set including (or except for) numerical value ranges of parameter values of variables thus selected in a search, to be displayed in the design function space 210 of the design search screen 200.

When the search described above is followed by execution of the next search processing for another variable, the control unit 130 of the design search apparatus 100 extracts, at the time of data set extraction in step S201, only a data set including (or except for) the parameter value of the variable, which is selected in the previous search and stored in the storage unit 120, from data sets associated with the other variable. Thus, in this search, only sample points reflecting the result of the previous search are displayed on the design search screen 200, and thus, the search can be performed so as to further narrow down design/function parameter values satisfying a desired condition, through those searches in which variables for the searching differs.

Although an example in which two searches are performed has been described above, it is possible to narrow down design/function parameter values satisfying a desired condition in a more limited manner by repeating searches more in which variables for the searching differs.

[Variation 3]

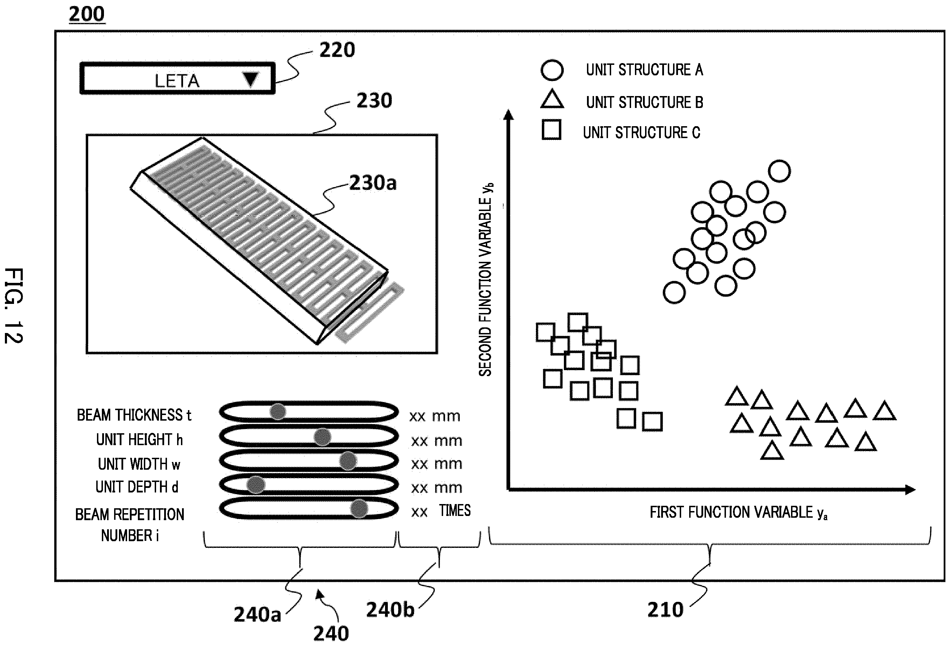

Variation 3 of the design search apparatus 100 according to the present embodiment will be described with reference to FIG. 12. The present variation provides a means of inputting design parameter values according to the dimensions of a structure drawn in the three-dimensional representation region 230 by drawing a bounding box 230a, which delimits a space, in the three-dimensional representation region 230.

The control unit 130 of the design search apparatus 100 is configured to provide a function that allows the user to draw, by using the input device 144, a primitive geometry element such as a cuboid, a cube, and a cylindrical shape in the three-dimensional representation region 230 of the design search screen 200 displayed by the design search apparatus 100, and further that allows the geometry element to be wholly or partially reduced or enlarged to adjust the respective unit dimensions thereof. As an example, such a geometry element may be stored in the storage unit 120 of the design search apparatus 100 in advance and drawn in the three-dimensional representation region 230 after being read by the control unit 130 from the storage unit 120 based on an operation using the input device 144.

The control unit 130 receives, for example, values of respective unit dimensions of the external appearance of the bounding box 230a drawn in the three-dimensional representation region 230 in the above-described manner as an input of design parameter values according to the external dimensions of the structure. The control unit 130 selects design parameter values according to the external dimensions of the structure according to the input, and draws, in the three-dimensional representation region 230, a three-dimensional representation of the structure whose dimensions are changed according to the design parameter values.

According to the present variation, it is possible to input design parameter values according to the external dimensions of a structure by an intuitive input of changing the sizes of the respective units of the bounding box 230a that is drawn, instead of a slider input using the sliders 240a in the parameter display region 240 or a direct numerical value input of the parameter values 240b.

[Variation 4]

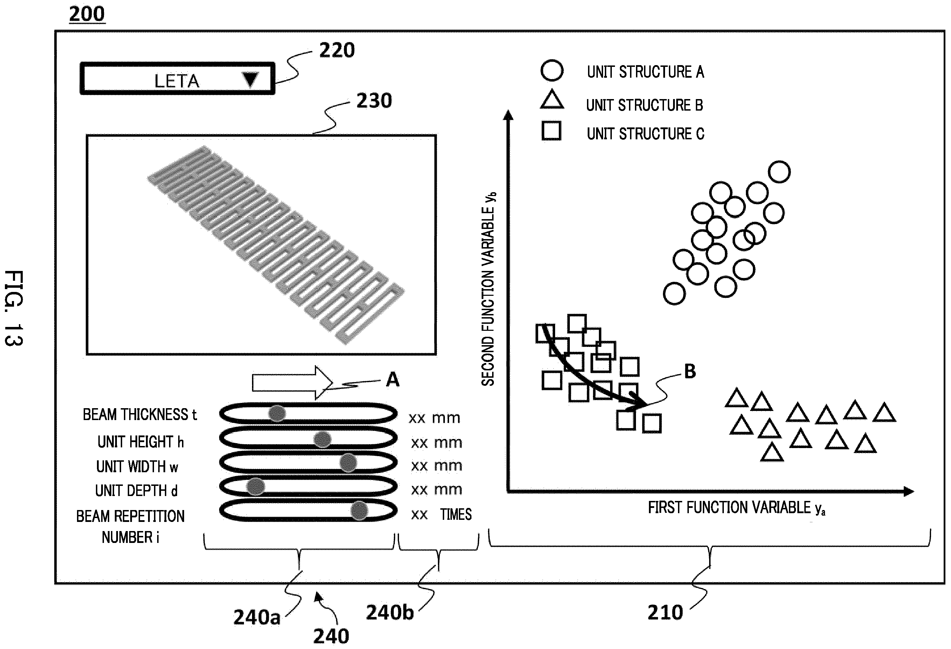

Variation 4 of the design search apparatus 100 according to the present embodiment will be described with reference to FIG. 13. The present variation provides a means of visualizing, when the sliders 240a in the parameter display region 240 are operated to change the design parameter values thereof, how the corresponding function parameter values are displaced correspondingly in the design function space.

As an example, in the present variation, when the user operates, by using the input device 144, the slider 240a in the parameter display region 240 (the slider of "BEAM THICKNESS t" in the example illustrated in FIG. 13) as indicated with the arrow A in the drawing to change the design parameter value of the beam thickness t, a sample point indicated by the corresponding function parameter value is displayed in the position displaced along the arrow B in the drawing in the design function space 210, and further, a trajectory of the displacement of the sample point is drawn in the design function space 210 as the arrow B in the drawing. In the above-described manner, when a certain design parameter value is changed using one of the sliders 240a, the function parameter value that changes correspondingly can be visualized in the design function space 210. Such visualization processing is executed by the control unit 130 of the design search apparatus 100 and can be implemented in particular in the case of interpolation between sample points displayed in the design function space 210.

[Variation 5]

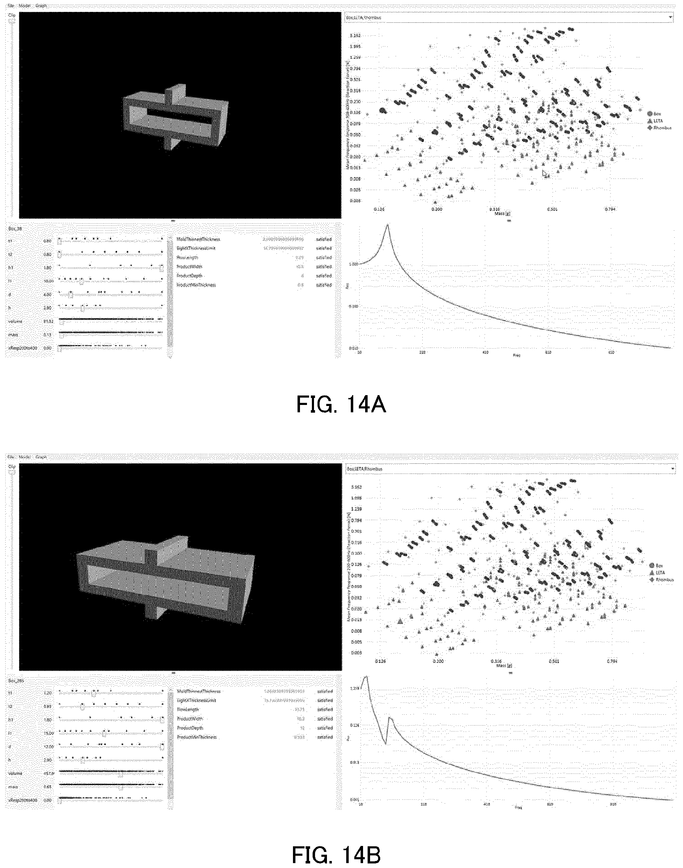

As Variation 5 of the present embodiment, FIGS. 14A to 16B illustrate examples of implementation of the design search screen 200 by the design search apparatus 100 of the present embodiment. The examples of implementation indicate analysis results of a mass to be loaded and the average frequency response at a certain frequency band for three different structures.

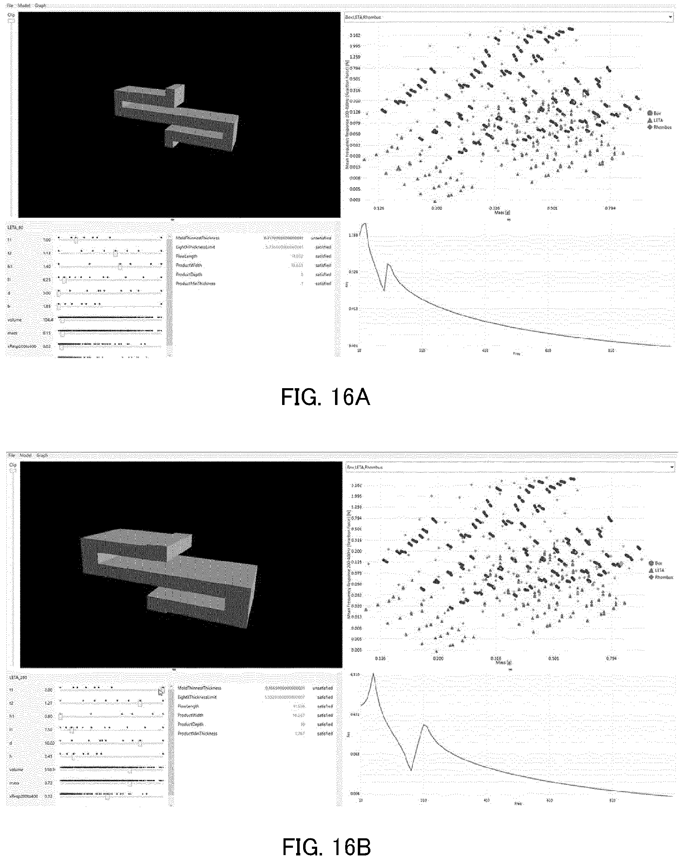

In each drawing of FIG. 14A to FIG. 16B, a design function space illustrated in the upper right of the drawing is set with the load mass, which is a design variable, as the horizontal axis and the average frequency response at a certain frequency band as the vertical axis. Further, in the examples of implementation, the display items 210, 220, 230, and 240 of the design search screen 200 illustrated in FIG. 10A and a detailed frequency response curve related to selected sample points are illustrated in the lower right of each drawing.

FIGS. 14A and 14B illustrate states in which sample points for a structure of the type of "box" are selected. FIGS. 14A and 14B illustrate states in which sample points, which differ between FIGS. 14A and 14B, are selected for the structure of "box". Accordingly, it can be seen that the parameter values and three-dimensional representations of the respective design variables of the structure thereof differ between FIGS. 14A and 14B and therefore the detailed frequency response curves thereof also indicate different characteristics.

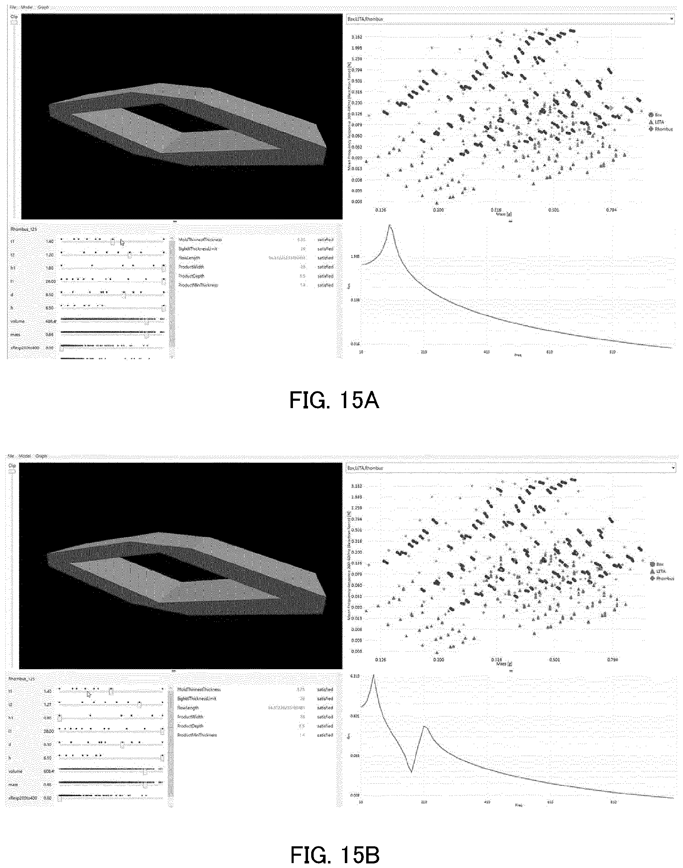

FIGS. 15A and 15B illustrate states in which sample points for a structure of the type of "rhombus" are selected. FIGS. 15A and 15B also illustrate states in which sample points, which differ between FIGS. 15A and 15B, are selected for the structure of "rhombus". Accordingly, it can be seen that the parameter values and three-dimensional representations of the respective design variables of the structure thereof differ between FIGS. 15A and 15B and therefore the detailed frequency response curves thereof also indicate different characteristics.

FIGS. 16A and 16B illustrate states in which sample points for a structure of the type of "LETA" are selected. FIGS. 16A and 16B also illustrate states in which sample points, which differ between FIGS. 16A and 16B, are selected for the structure of "LETA". Accordingly, it can be seen that the parameter values and three-dimensional representations of the respective design variables of the structure thereof differ between FIGS. 16A and 16B and therefore the detailed frequency response curves thereof also indicate different characteristics.

[Variation 6]

As Variation 6 of the present embodiment, various techniques of performing a search in a design function space in a state in which a constraint is applied to one or both of a design variable and a function variable will be described. For example, it is also possible to set a desired constraint for searching for design/function parameter values (sample points) by setting a constraint condition to certain one or a certain plurality of variables such that a fixed value(s) thereof is/are maintained. The control unit 130 of the design search apparatus 100 is configured to be capable of setting such a constraint condition to a desired variable according to a user input using the input device 144.

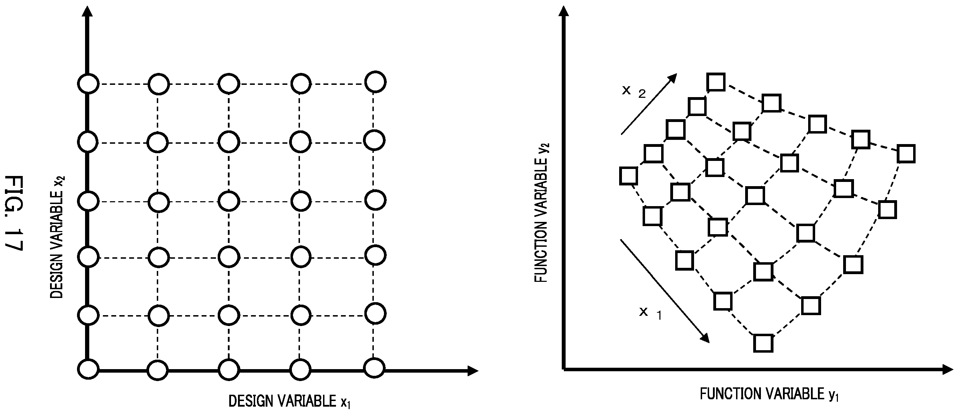

Hereinafter, several examples in which, in a state in which a constraint condition is applied to one or a plurality of variables, a search is performed for the remaining variable(s) will be described. In each example to be described below, for ease of description, there are two function variables $y_1$ and $y_2$ of the function variable vector Y as a result of analysis of two design variables $x_1$ and $x_2$ of the design variable vector X and interpolation between sample points is performed in both a design function space of the design variables $x_1$ and $x_2$ and a design function space of the function variables $y_1$ and $y_2$ as illustrated in FIG. 17. Further, since a differentiable interpolation function that determines the function variables $y_1$ and $y_2$ from the design variables $x_1$ and $x_2$ is obtained, there are common prerequisites that the function variables $y_1$ and $y_2$ are determined from the design variables $x_1$ and $x_2$ by using the interpolation function, and that the design variables $x_1$ and $x_2$ can be obtained from the function variables $y_1$ and $y_2$ by convergence calculation. Note that, the number of variables included in the design variables and function variables and the number of variables for which a constraint condition is set, among the variables included in the design variables and function variables, can be determined as appropriate.

(1-1) Case where a design variable is fixed in a design function space composed of design variables

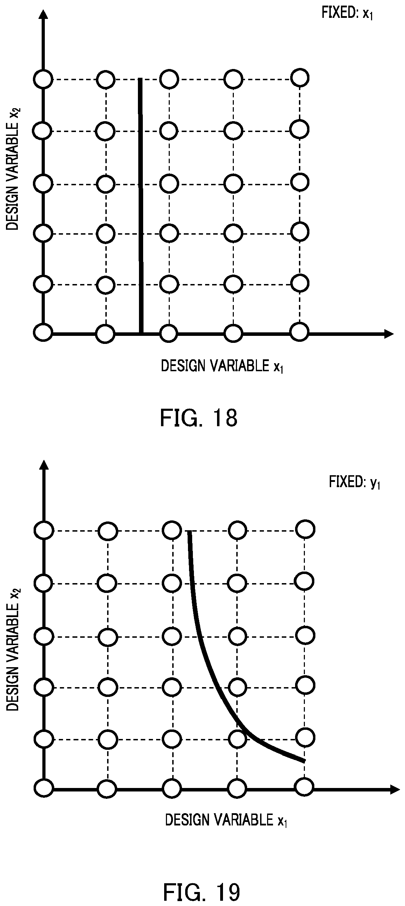

FIG. 18 illustrates a relation between the design variables $x_1$ and $x_2$ in a case where the design variable $x_1$ is fixed in a design function space composed of the two design variables $x_1$ and $x_2$. The line indicated with the bold line in the design function space illustrated in FIG. 18 represents a range that can be taken by the design variable $x_2$ in a case where the parameter value of the design variable $x_1$ is fixed.

In this case, it can be found as a result of a search that in the design function space, the design variable $x_2$ is selectable in the range indicated with the bold line in FIG. 18.

(1-2) Case where a function variable is fixed in a design function space composed of design variables

FIG. 19 illustrates a relation between the design variables $x_1$ and $x_2$ in a case where the function variable $y_1$ which is not selected for an axis is fixed in a design function space composed of the two design variables $x_1$ and $x_2$. The curved line indicated with the bold line in the design function space illustrated in FIG. 19 represents a relationship between the design variables $x_1$ and $x_2$, which maintains the parameter value of the function variable $y_1$ at a certain value.

This aspect is useful, for example, in a case where, when the natural frequency is the function variable yi, the relationship between the design variables $x_1$ and $x_2$ structured such that the function variable $y_1$ (natural frequency) is a constant value is desired to be visualized and/or searched.

(2-1) Case where a design variable is fixed in a design function space composed of function variables

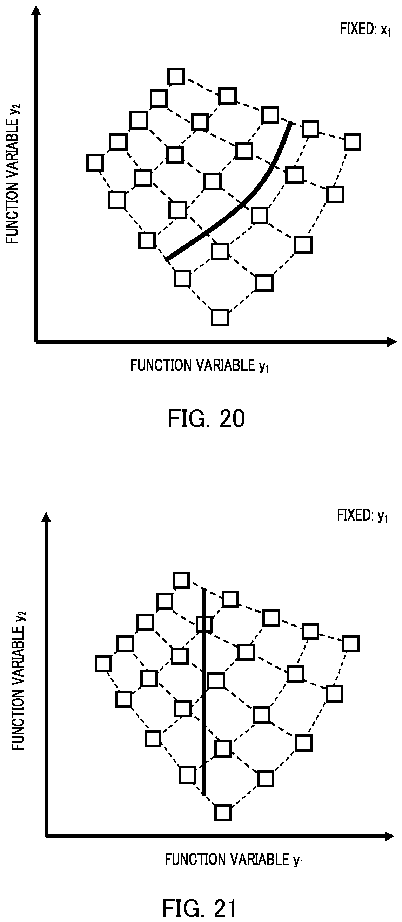

FIG. 20 illustrates a relation between the function variables $y_1$ and $y_2$ in a case where the design variable $x_1$ which is not selected for an axis is fixed in a design function space composed of the two function variables $y_1$ and $y_2$. The curved line indicated with the bold line in the design function space illustrated in FIG. 20 represents a relationship between the function variables $y_1$ and $y_2$, which maintains the parameter value of the design variable $x_1$ at a certain value.
This aspect is useful, for example, in a case where, when the stiffness is the function variable $y_1$, the natural frequency is the function variable $y_2$, and the design variable $x_1$ which is the thickness of a certain portion of the structure is fixed, it is desired to be visualized and/or searched how the function variable $y_1$ (stiffness) and the function variable $y_2$ (natural frequency) change when the remaining design variable $x_2$ is changed.

(2-2) Case where a function variable is fixed in a design function space composed of function variables

FIG. 21 illustrates a relation between the function variables $y_1$ and $y_2$ in a case where the function variable $y_1$ is fixed in a design function space composed of the two function variables $y_1$ and $y_2$. The line indicated with the bold line in the design function space illustrated in FIG. 21 represents a range that can be taken by the function variable $y_2$ in a case where the parameter value of the function variable $y_1$ is fixed.
In this case, it can be found as a result of a search that in the design function space, the function variable $y_2$ is selectable in the range indicated with the bold line in FIG. 21. This aspect is useful, for example, in a case where, when the stiffness is the function variable $y_1$, the natural frequency is the function variable $y_2$, and the function variable $y_1$ as the stiffness is fixed, it is desired to be visualized and/or searched how the function variable $y_2$ (natural frequency) changes when the design variables $x_1$ and $x_2$ are changed.

(3-1) Case where a design variable which is selected for an axis is fixed in a design function space composed of the design variable and a function variable

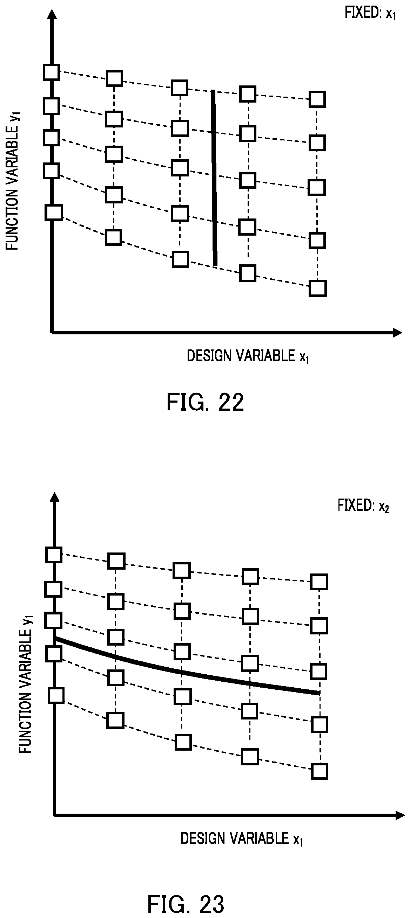

FIG. 22 illustrates a relation between the design variable $x_1$ and the function variable $y_1$ in a case where the design variable $x_1$ which is selected for an axis is fixed in a design function space composed of the design variable $x_1$ and the function variable $y_1$. The line indicated with the bold line in the design function space illustrated in FIG. 22 represents a range that can be taken by the function variable $y_1$ in a case where the parameter value of the design variable $x_1$ is fixed.
This aspect is useful, for example, in a case where, when the stiffness is the function variable $y_1$, the natural frequency is the function variable $y_2$, and the design variable $x_1$ which is the thickness of a certain portion of the structure is fixed, the range that can be taken by the function variable $y_1$ (stiffness) is desired to be visualized and/or searched when the remaining design variable $x_2$ is changed.

(3-2) Case where a design variable which is not selected for an axis is fixed in a design function space composed of a design variable and a function variable

FIG. 23 illustrates a relation between the design variable $x_1$ and the function variable $y_1$ in a case where the design variable $x_2$ is fixed in a design function space composed of the design variable $x_1$ and the function variable $y_1$. The curved line indicated with the bold line in the design function space illustrated in FIG. 23 represents a relationship between the design variable $x_1$ and the function variable $y_2$, which maintains the parameter value of the design variable $x_2$ at a certain value.
This aspect is useful, for example, in a case where, when the stiffness is the function variable $y_1$, the natural frequency is the function variable $y_2$, the thickness of a certain portion of the structure is the design variable $x_1$ the length of the portion is the design variable $x_2$, and the design variable $x_2$ as the length of the portion is fixed, a relationship between the design variable $x_1$ (the thickness of the portion) and the function variable $y_2$ (natural frequency) is desired to be visualized and/or searched.

(3-3) Case where a function variable which is selected for an axis is fixed in a design function space composed of a design variable and the function variable

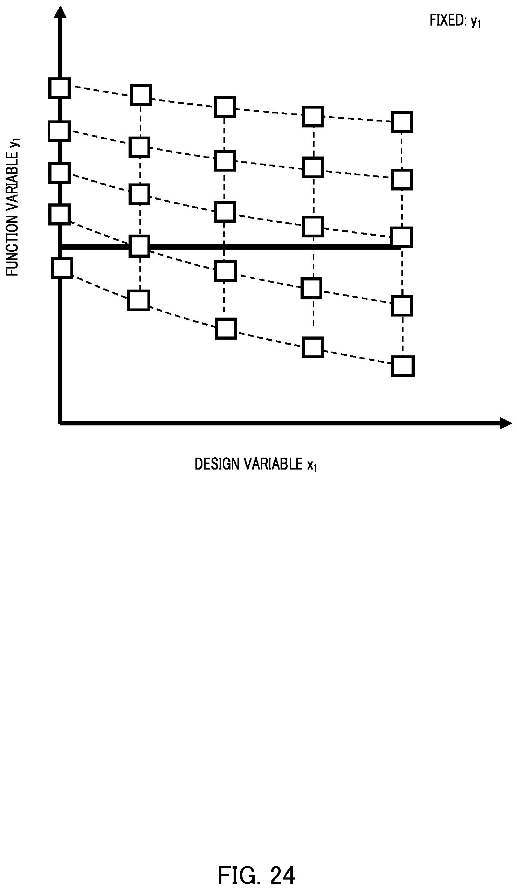

FIG. 24 illustrates a relation between the design variable $x_1$ and the function variable $y_1$ in a case where the function variable $y_1$ is fixed in a design function space composed of the design variable $x_1$ and the function variable $y_1$. The line indicated with the bold line in the design function space illustrated in FIG. 24 represents a range that can be taken by the design variable $x_1$ in a case where the parameter value of the function variable $y_1$ is fixed.
This aspect is useful, for example, in a case where, when the stiffness is the function variable $y_1$, the natural

frequency is the function variable $y_2$, the thickness of a certain portion of the structure is the design variable $x_1$, and the function variable $y_1$ as the stiffness is fixed, the range that can be taken by the design variable $x_1$ (the thickness of the certain portion of the structure) is desired to be visualized and/or searched.

(3-4) Case where a function variable which is not selected for an axis is fixed in a design function space composed of a design variable and a function variable

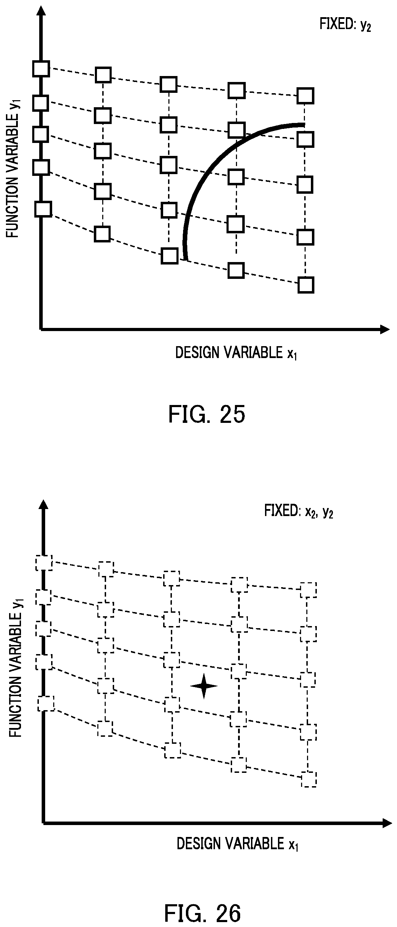

FIG. 25 illustrates a relation between the design variable x1 and the function variable $y_1$ in a case where the function variable $y_2$ which is not selected for an axis is fixed in a design function space composed of the design variable $x_1$ and the function variable $y_1$. The curved line indicated with the bold line in the design function space illustrated in FIG. 25 represents a relationship between the design variable $x_1$ and the function variable $y_2$, which maintains the parameter value of the function variable $y_2$ at a certain value.
This aspect is useful, for example, in a case where, when the stiffness is the function variable $y_1$, the natural frequency is the function variable $y_2$, the thickness of a certain portion of the structure is the design variable $x_1$, and the function variable $y_2$ as the natural frequency is fixed, a relationship between the design variable $x_1$ (the thickness of the portion) and the function variable $y_1$ (stiffness) is desired to be visualized and/or searched.

(3-5) Case where a design variable and a function variable each of which is not selected for an axis are fixed in a design function space composed of a design variable and a function variable

FIG. 26 illustrates a relation between the design variable $x_1$ and the function variable $y_1$ in a case where the design variable $x_2$ and the function variable $y_2$ each of which is not selected for an axis are fixed in a design function space composed of the design variable $x_1$ and the function variable $y_1$. In a case where two variables of the design variable $x_2$ and the function variable $y_2$ are fixed, the design variable $x_1$ and the function variable $y_2$ that satisfy the above-described case are only one point. Accordingly, a sample point of the design variable $x_1$ and the function variable $y_2$ that satisfy the conditions for the fixed variables is indicated in the design function space illustrated in FIG. 26.
This aspect is useful, for example, in a case where, when the stiffness is the function variable $y_1$, the natural frequency is the function variable $y_2$, the thickness of a certain portion of the structure is the design variable $x_1$, the length of the portion is the design variable $x_2$, and the design variable $x_2$ as the length of the portion and the function variable $y_2$ as the natural frequency are fixed, a relationship between the design variable $x_1$ (the thickness of the portion) and the function variable $y_2$ (natural frequency) is desired to be visualized and/or searched.

Embodiment 2

Embodiment 2 of the present invention will be described. Embodiment 2 of the present invention relates to a method of producing a structure designed and searched by the design search apparatus described in Embodiment 1. According to the present embodiment, a structure designed and searched by the design search apparatus is produced by various molding apparatuses, such as a 3D printer and an injection molding machine, or a shaping apparatus such as a machining apparatus.

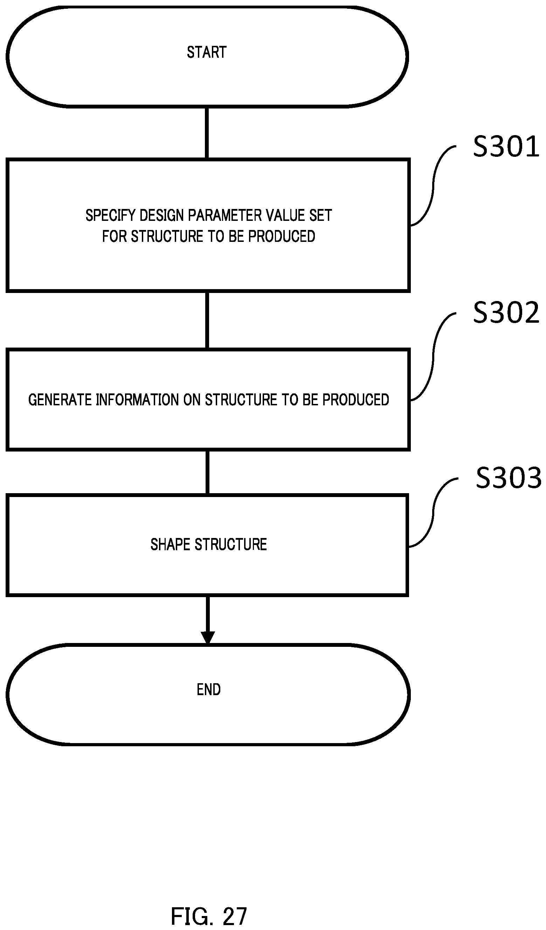

FIG. 27 illustrates an entire flow of processing according to Embodiment 2.
In the processing in the present embodiment, the method of searching for design/function parameter values described with reference to FIG. 9 is first executed by using the design search apparatus 100 described with reference to FIG. 1 in Embodiment 1 to specify a design parameter value set that satisfies a desired requirement for a structure to be produced (step S301).
In step S301, the control unit 130 of the design search apparatus 100 extracts, according to a user input that selects one or a plurality of design variables for the searching and/or one or a plurality of function variables for the searching from one or plurality of function variables and/or one or plurality of design variable vectors, a design parameter value set and/or a function parameter value set from the storage unit 120, where the design parameter value set and/or the function parameter value set is/are associated with the one or plurality of design variables having been selected and/or the one or plurality of function variables having been selected, generates a design function space related to the one or plurality of design variables having been selected and/or the one or plurality of function variables having been selected, and causes the display 142 to display the design function space. The control unit 130 causes one or a plurality of sample points and/or an approximation region to be displayed in the design function space. The one or plurality of sample points is configured with the design parameter value set and/or the function parameter value set, where the design parameter value set and/or the function parameter value set is/are associated with the one or plurality of design variables having been selected and/or the one or plurality of function variables having been selected. The approximation region is configured with a design parameter value set and/or a function parameter value set, where the design parameter value set and/or the function parameter value set is/are generated by at least some of the plurality of sample points and approximated by an approximate function. The control unit 130 then specifies, according to a user input that specifies a constraint condition for the one or plurality of design variables and/or the one or plurality of function variables, the design parameter value set that satisfies the constraint condition.

Next, the design search apparatus 100 generates information on a structure to be produced based on the design parameter value set specified in step S301 (S302).

The generation of the information on a structure to be produced includes, for example, specifying the geometry, respective unit dimensions, material, and the like of the structure to be produced based on a geometry parameter value set and a material parameter value set, which are included in the specified design parameter value set, and generating three-dimensional data of the structure to be produced, or the like. The information on a structure to be produced (three-dimensional data or the like) is preferably data in a form which allows a shaping apparatus to be described later can shape the structure based on the information on the structure in a case where the shaping apparatus receives the information from the design search apparatus 100.

Finally, the design search apparatus 100 causes the shaping apparatus to execute the shaping of the structure based on the information on the structure to be produced which is generated in step S302 (step S303).

The design search apparatus 100 can communicate with the shaping apparatus (not illustrated) via the communication unit 110, and information (three-dimensional data or the like) on the structure to be produced which is generated by the design search apparatus 100 in step S302 is transmitted from the communication unit 110 to the shaping apparatus. The shaping apparatus executes the shaping of the structure based on the information (three-dimensional data or the like) on the structure to be produced which is received from the communication unit 110.

The shaping of the structure by the shaping apparatus includes performing shaping with an arbitrary technique(s) by referring to the information on the structure acquired from the design search apparatus 100. The techniques may be, for example, at least one of the following techniques, but are not limited thereto.

- Cutting
- Mold molding
- 3D printing
- Optical shaping using photocurable resin
- Injection molding
- Powder compression molding
- Laser machining

Note that, although a case where the design search apparatus 100 performs a search for a structure to be produced through the shaping of the structure has been described above as an example, it may also be configured such that the design search apparatus 100 searches for a structure to be produced and performs processing of generating three-dimensional data or the like and another information processing apparatus performs processing of shaping the structure. In this case, the other information processing apparatus connected to a shaping apparatus (such as a 3D printer, various molding apparatuses, and a machining apparatus) that shapes the structure may be provided with information on a structure to be produced which is generated by the design search apparatus 100 by an arbitrary means (via a communication network or via a physical storage medium), and the shaping processing may be performed by the other information process apparatus based on the information on the structure.

Although the present invention has been described above through the embodiments of the invention, the embodiments described above are not intended to limit the claimed invention. In addition, forms combining the features described in the embodiments of the present invention may also be included in the technical scope of the present invention. Further, it is also apparent to those skilled in the art that various modifications or improvements can be made to the embodiments described above.

Reference Signs List

100 Design search apparatus
110 Communication unit
120 Storage unit
130 Control unit
140 Input/output unit

**Claims**

1. An apparatus that constructs an environment, the environment allowing a search for a design parameter and/or a function parameter, the design parameter and/or the function parameter satisfying a desired requirement for one or a plurality of structures, the apparatus comprising:

   a control unit; and
   a storage unit, wherein
   the control unit is configured to execute:

   setting one or a plurality of design variable vectors that includes a plurality of groups of design parameter value sets each including one or a plurality of design parameters values to be inputted to one or a plurality of design variables related to a configuration of the one or plurality of structures;
   acquiring, by executing analysis processing based on a predetermined analysis condition for the one or plurality of design variable vectors, one or a plurality of function variable vectors that includes a plurality of groups of function parameter value sets each including one or a plurality of function parameter values related to one or a plurality of function variables related to a function exhibited by the one or plurality of structures;
   storing, for each of the design parameter value sets and each of the function parameter value sets, one of the design parameter value sets and one of the function parameter value sets in a state of being associated with each other in the storage unit, the one of the function parameter value sets being acquired based on the one of the design parameter value sets; and
   storing one of the one or plurality of design variable vectors, one or a plurality of the analysis conditions, and the one or plurality of function variable vectors in association with each other in the storage unit, the one or plurality of function variable vectors being acquired for each of the one or plurality of analysis conditions as a result of executing the analysis processing based on the one or plurality of analysis conditions for the one or plurality of design variable vectors.

2. The apparatus according to claim 1, wherein:

   the control unit is configured to further execute:

   generating an evaluation function that defines a requirement required to output the one or plurality of function variable vectors; and
   setting one or a plurality of evaluation function parameters including one or a plurality of evaluation function parameter values to be inputted to one or a plurality of variables included in the evaluation function, and

   the predetermined analysis condition is defined by the evaluation function and the one or plurality of evaluation function parameters.

3. The apparatus according to claim 2, wherein each of the one or plurality of evaluation function parameters includes one or a plurality of variable labels and the one or plurality of evaluation function parameter values associated with the one or plurality of variable labels, respectively, the one or plurality of variable labels indicating the one or plurality of variables included in the evaluation function.

4. The apparatus according to any one of claims 1 to 3, wherein:

   each of the design parameter value sets includes one or a plurality of variable labels and the one or plurality of design parameter values associated with the one or plurality of variable labels, respectively, the one or plurality of variable labels indicating the one or plurality of design variables, and
   each of the design parameter value sets includes one or a plurality of variable labels and the one or plurality of function parameter values associated with the one or plurality of variable labels, respectively, the one or plurality of variable labels indicating the one or plurality of function variables.

5. An apparatus that allows a search for a design parameter and/or a function parameter, the design parameter and/or the function parameter satisfying a desired requirement for one or a plurality of structures, the apparatus comprising:

   a control unit; and

a storage unit, wherein
the storage unit stores:

one or a plurality of design variable vectors that includes a plurality of groups of design parameter value sets each including one or a plurality of design parameter values to be inputted to one or a plurality of design variables related to a configuration of the one or plurality of structures, and

one or a plurality of function variable vectors that is acquired by executing analysis processing based on a predetermined analysis condition for the one or plurality of design variable vectors and includes a plurality of groups of function parameter value sets each including one or a plurality of function parameter values related to one or a plurality of function variables related to a function exhibited by the one or plurality of structures, wherein

for each of the design parameter value sets and each of the function parameter value sets, one of the design parameter value sets and one of the function parameter value sets are associated with each other, the one of the function parameter value sets being acquired based on the one of the design parameter value sets, and

one of the one or plurality of design variable vectors, one or a plurality of the analysis conditions, and the one or plurality of function variable vectors are associated with each other, the one or plurality of function variable vectors being acquired for each of the one or plurality of analysis conditions as a result of executing the analysis processing based on the one or plurality of analysis conditions for the one or plurality of design variable vectors, and

the control unit is configured to execute:

extracting, according to a user input that selects the one or plurality of design variables for the search and/or the one or plurality of function variables for the search from the one or plurality of function variables and/or the one or plurality of design variable vectors, one of the design parameter value sets and/or one of the function parameter value sets from the storage unit, the one of the design parameter value sets and/or the one of the function parameter value sets being associated with the one or plurality of design variables having been selected and/or the one or plurality of function variables having been selected;

generating a design function space related to the one or plurality of design variables having been selected and/or the one or plurality of function variables having been selected; and

causing one or a plurality of sample points and/or an approximation region to be displayed in the design function space, wherein the one or plurality of sample points is configured with the one of the design parameter value sets and/or the one of the function parameter value sets and the approximation region is configured with one of the design parameter value sets and/or one of the function parameter value sets, the one of the design parameter value sets and/or the one of the function parameter value sets being associated with the one or plurality of design variables having been selected and/or the one or plurality of function variables having been selected, the one of the design parameter value sets and/or the one of the function parameter value sets being generated by at least some of the plurality of sample points and being approximated by an approximate function.

6. The apparatus according to claim 5, wherein the control unit is configured to specify, according to a user input that sets a constraint condition for the one or plurality of design variables and/or the one or plurality of function variables, the one of the design parameter value sets and/or the one of the function parameter value sets, the one of the design parameter value sets and/or the one of the function parameter value sets satisfying the constraint condition.

7. The apparatus according to claim 6, wherein:

the user input that specifies the constraint condition is a user input that points the one or plurality of sample points or the approximation region, the one or plurality of sample points or the approximation region being displayed in the design function space, and

the control unit is configured to specify the one of the design parameter value sets and/or the one of the function parameter value sets and cause information on the one of the design parameter value sets having been specified and/or the one of the function parameter value sets having been specified to be presented, the one of the design parameter value sets and/or the one of the function parameter value sets corresponding to the one or plurality of sample points having been pointed by the user input or a position in the approximation region having been pointed by the user input.

8. The apparatus according to any one of claims 5 to 7, wherein the control unit is configured to further execute interpolating the one of the design parameter value sets and/or the one of the function parameter value sets between at least some of the plurality of sample points.

9. The apparatus according to any one of claims 5 to 8, wherein the control unit is configured to cause, according to a user input of one or a plurality of the design parameter value sets and/or one or a plurality of the function parameter value sets, the one or plurality of sample points or a point in the approximation region to be displayed with highlight, the one or plurality of sample points or the approximation region being configured with the one of the design parameter value sets having been inputted and/or the one of the function parameter value sets having been inputted.

10. The apparatus according to any one of claims 5 to 9, wherein the extracting of the one of the design parameter value sets and/or the one of the function parameter value sets includes extracting the one of the design parameter value sets and/or the one of the function parameter value sets according to a constraint condition set to the one or plurality of design variables and/or the one or plurality of function variables.

11. The apparatus according to any one of claims 5 to 10, wherein the control unit is configured to change, according to a user input that continuously changes numerical values of the one or plurality of design parameter values and/or the one or plurality of function parameter values in one or a plurality of the design parameter value sets and/or one or a plurality of the function parameter value sets, a position/positions of the one or plurality of sample points configured with the one or plurality of design parameter values and/or the one or plurality of function parameter values.

12. The apparatus according to claim 11, wherein the control unit is configured to cause a trajectory/trajectories of the one or plurality of sample points whose position changes, to be displayed.

13. A method of constructing an environment by using an apparatus including a control unit and a storage unit, the environment allowing a search for a design parameter and/or a function parameter, the design parameter and/or the function parameter satisfying a desired requirement for one or a plurality of structures, the method comprising:

setting, by the control unit, one or a plurality of design variable vectors that includes a plurality of groups of design parameter value sets each including one or a plurality of design parameters values to be inputted to one or a plurality of design variables related to a configuration of the one or plurality of structures;
acquiring, by the control unit, by executing analysis processing based on a predetermined analysis condition for the one or plurality of design variable vectors, one or a plurality of function variable vectors that includes a plurality of groups of function parameter value sets each including one or a plurality of function parameter values related to one or a plurality of function variables related to a function exhibited by the one or plurality of structures;
storing, by the control unit, for each of the design parameter value sets and each of the function parameter value sets, one of the design parameter value sets and one of the function parameter value sets in a state of being associated with each other in the storage unit, the one of the function parameter value sets being acquired based on the one of the design parameter value sets; and
storing, by the control unit, one of the one or plurality of design variable vectors, one or a plurality of the analysis conditions, and the one or plurality of function variable vectors in association with each other in the storage unit, the one or plurality of function variable vectors being acquired for each of the one or plurality of analysis conditions as a result of executing the analysis processing based on the one or plurality of analysis conditions for the one or plurality of design variable vectors.

14. The method according to claim 13, further comprising,

generating, by the control unit, an evaluation function that defines a requirement required to output the one or plurality of function variable vectors; and
setting, by the control unit, one or a plurality of evaluation function parameters including one or a plurality of evaluation function parameter values to be inputted to one or a plurality of variables included in the evaluation function, wherein
the predetermined analysis condition is defined by the evaluation function and the one or plurality of evaluation function parameters.

15. The method according to claim 14, wherein each of the one or plurality of evaluation function parameters includes one or a plurality of variable labels and the one or plurality of evaluation function parameter values associated with the one or plurality of variable labels, respectively, the one or plurality of variable labels indicating the one or plurality of variables included in the evaluation function.

16. The method according to any one of claims 13 to 15, wherein:

each of the design parameter value sets includes one or a plurality of variable labels and the one or plurality of design parameter values associated with the one or plurality of variable labels, respectively, the one or plurality of variable labels indicating the one or plurality of design variables, and
each of the design parameter value sets includes one or a plurality of variable labels and the one or plurality of function parameter values associated with the one or plurality of variable labels, respectively, the one or plurality of variable labels indicating the one or plurality of function variables.

17. A method of searching for a design parameter and/or a function parameter by using an apparatus including a control unit and a storage unit, the design parameter and/or the function parameter satisfying a desired requirement for one or a plurality of structures, the method comprising:

storing, by the storage unit,

one or a plurality of design variable vectors that includes a plurality of groups of design parameter value sets each including one or a plurality of design parameter values to be inputted to one or a plurality of design variables related to a configuration of the one or plurality of structures, and
one or a plurality of function variable vectors that is acquired by executing analysis processing based on a predetermined analysis condition for the one or plurality of design variable vectors and includes a plurality of groups of function parameter value sets each including one or a plurality of function parameter values related to one or a plurality of function variables related to a function exhibited by the one or plurality of structures, wherein
for each of the design parameter value sets and each of the function parameter value sets, one of the design parameter value sets and one of the function parameter value sets are associated with each other, the one of the function parameter value sets being acquired based on the one of the design parameter value sets, and
one of the one or plurality of design variable vectors, one or a plurality of the analysis conditions, and the one or plurality of function variable vectors are associated with each other, the one or plurality of function variable vectors being acquired for each of the one or plurality of analysis conditions as a result of executing the analysis processing based on the one or plurality of analysis conditions for the one or plurality of design variable vectors;

extracting, by the control unit, according to a user input that selects the one or plurality of design variables for the searching and/or the one or plurality of function variables for the searching from the one or plurality of function variables and/or the one or plurality of design variable vectors, one of the design parameter value sets and/or one of the function parameter value sets from the storage unit, the one of the design parameter value sets and/or the one of the function parameter value sets being associated with the one or plurality of design variables having been selected and/or the one or plurality of function variables having been selected;
generating, by the control unit, a design function space related to the one or plurality of design variables having been selected and/or the one or plurality of function variables having been selected; and
causing, by the control unit, one or a plurality of sample points and/or an approximation region to be displayed in the design function space, wherein the one or plurality of sample points is configured with the one of the design parameter value sets and/or the one of the function parameter value sets and the approximation region is configured with one of the design parameter value sets and/or one of the function parameter value sets, the one of the design parameter value sets and/or the one of the function parameter value sets being associated with the one or plurality of design variables having been selected and/or the one or plurality of function variables having been selected, the one of the design parameter value sets and/or the one of the function parameter value sets being generated by at least some of the plurality of sample points and being approximated by an approximate function.

18. The method according to claim 17, further comprising:
specifying, by the control unit, according to a user input that specifies a constraint condition for the one or plurality of design variables and/or the one or plurality of function variables, the one of the design parameter value sets and/or the one of the function parameter value sets, the one of the design parameter value sets and/or the one of the function parameter value sets satisfying the constraint condition.

19. The method according to claim 18, wherein the user input that specifies the constraint condition is a user input that points the one or plurality of sample points or the approximation region, the one or plurality of sample points or the approximation region being displayed in the design function space, the method further comprising:
specifying, by the control unit, the one of the design parameter value sets and/or the one of the function parameter value sets and causing, by the control unit, information on the one of the design parameter value sets having been specified and/or the one of the function parameter value sets having been specified to be presented, the one of the design parameter value sets and/or the one of the function parameter value sets corresponding to the one or plurality of sample points having been pointed by the user input or a position in which the pointing is performed.

20. The method according to claim 17, further comprising:
interpolating, by the control unit, the one of the design parameter value sets and/or the one of the function parameter value sets between at least some of the plurality of sample points.

21. The method according to any one of claims 17 to 20, further comprising:
causing, by the control unit, according to a user input of one or a plurality of the design parameter value sets and/or one or a plurality of the function parameter value sets, the one or plurality of sample points or a point in the approximation region to be displayed with highlight, the one or plurality of sample points or the approximation region being configured with the one of the design parameter value sets having been inputted and/or the one of the function parameter value sets having been inputted.

22. The method according to any one of claims 17 to 21, wherein the extracting of the one of the design parameter value sets and/or the one of the function parameter value sets includes extracting the one of the design parameter value sets and/or the one of the function parameter value sets according to a constraint condition set to the one or plurality of design variables and/or the one or plurality of function variables.

23. The method according to any one of claims 17 to 22, further comprising:
changing, by the control unit, according to a user input that continuously changes numerical values of the one or plurality of design parameter values and/or the one or plurality of function parameter values in one or a plurality of the design parameter value sets and/or one or a plurality of the function parameter value sets, a position/positions of the one or plurality of sample points configured with the one or plurality of design parameter values and/or the one or plurality of function parameter values.

24. The method according to claim 23, further comprising:
causing, by the control unit, a trajectory/trajectories of the one or plurality of sample points whose position changes, to be displayed.

25. A program that causes a control unit of a computer to execute a method of constructing an environment, the environment allowing a search for a design parameter and/or a function parameter, the design parameter and/or the function parameter satisfying a desired requirement for one or a plurality of structures, wherein the method comprises:

setting one or a plurality of design variable vectors that includes a plurality of groups of design parameter value sets each including one or a plurality of design parameters values to be inputted to one or a plurality of design variables related to a configuration of the one or plurality of structures;
acquiring, by executing analysis processing based on a predetermined analysis condition for the one or plurality of design variable vectors, one or a plurality of function variable vectors that includes a plurality of groups of function parameter value sets each including one or a plurality of function parameter values related to one or a plurality of function variables related to a function exhibited by the one or plurality of structures;
storing, for each of the design parameter value sets and each of the function parameter value sets, one of the design parameter value sets and one of the function parameter value sets in a state of being associated with each other in a storage unit of the computer, the one of the function parameter value sets being acquired based on the one of the design parameter value sets; and
storing one of the one or plurality of design variable vectors, one or a plurality of the analysis conditions, and the one or plurality of function variable vectors in association with each other in the storage unit, the one or plurality of function variable vectors being acquired for each of the one or plurality of analysis conditions as a result of executing the analysis processing based on the one or plurality of analysis conditions for the one or plurality of design variable vectors.

26. A program that causes a control unit of a computer to execute a method of searching for a design parameter and/or a function parameter, the design parameter and/or the function parameter satisfying a desired requirement for one or a plurality of structures, wherein:

the computer includes a storage unit, the storage unit storing:

one or a plurality of design variable vectors that includes a plurality of groups of design parameter value sets each including one or a plurality of design parameter values to be inputted to one or a plurality of design variables related to a configuration of the one or plurality of structures, and
one or a plurality of function variable vectors that is acquired by executing analysis processing based on a predetermined analysis condition for the one or plurality of design variable vectors and includes a plurality of groups of function parameter value sets each including one or a plurality of function parameter values related to one or a plurality of function variables related to a function exhibited by the one or plurality of structures, wherein
for each of the design parameter value sets and each of the function parameter value sets, one of the design parameter value sets and one of the function parameter value sets are associated with each other, the one of the function parameter value sets being acquired based on the one of the design parameter value sets, and
one of the one or plurality of design variable vectors, one or a plurality of the analysis conditions, and the one or plurality of function variable vectors are associated with each other, the one or plurality of function variable vectors being acquired for each of the one or plurality of analysis conditions as a result of executing the analysis processing based on the one or plurality of analysis conditions for the one or plurality of design variable vectors, and

the method includes:

extracting, according to a user input that selects the one or plurality of design variables for the searching and/or the one or plurality of function variables for the searching from the one or plurality of function variables and/or the one or plurality of design variable vectors, one of the design parameter value sets and/or one of the function parameter value sets from the storage unit, the one of the design parameter value sets and/or the one of the function parameter value sets being associated with the one or plurality of design variables having been selected and/or the one or plurality of function variables having been selected;
generating a design function space related to the one or plurality of design variables having been selected and/or the one or plurality of function variables having been selected; and
mapping one or a plurality of sample points in the design function space, wherein the one or plurality of sample points is configured with the one of the design parameter value sets and/or the one of the function parameter value sets, the one of the design parameter value sets and/or the one of the function parameter value sets being associated with the one or plurality of design variables having been selected and/or the one or plurality of function variables having been selected.

27. Search data for a design parameter and/or a function parameter, the search data having a data structure in which one or a plurality of design variable vectors and one or a plurality of function variable vectors are associated with each other, the one or plurality of design variable vectors including a plurality of groups of design parameter value sets each including one or a plurality of design parameter values to be inputted to one or a plurality of design variables related to a configuration of a structure, the one or plurality of function variable vector being acquired by executing analysis processing based on a predetermined analysis condition for the one or plurality of design variable vectors and including a plurality of groups of function parameter value sets each including one or a plurality of function parameter values related to one or a plurality of function variables related to a function exhibited by the structure, wherein

for each of the design parameter value sets and each of the function parameter value sets, one of the design parameter value sets and one of the function parameter value sets are associated with each other, the one of the function parameter value sets being acquired based on the one of the design parameter value sets, and
one of the one or plurality of design variable vectors, one or a plurality of the analysis conditions, and the one or plurality of function variable vectors are associated with each other, the one or plurality of function variable vectors being acquired for each of the one or plurality of analysis conditions as a result of executing the analysis processing based on the one or plurality of analysis conditions for the one or plurality of design variable vectors.

28. The search data according to claim 27, wherein the predetermined analysis condition includes:

an evaluation function that defines a requirement required to output the one or plurality of function variable vectors; and

one or a plurality of evaluation function parameters including one or a plurality of evaluation function parameter values to be inputted to one or a plurality of variables included in the evaluation function.

29. A method of producing a structure by using an apparatus including a control unit and a storage unit, the method comprising:

specifying a design parameter value set that satisfies a desired requirement for a structure to be produced, wherein the storage unit stores:

one or a plurality of design variable vectors that includes a plurality of groups of design parameter value sets each including one or a plurality of design parameter values to be inputted to one or a plurality of design variables related to a configuration of the structure, and

one or a plurality of function variable vectors that is acquired by executing analysis processing based on a predetermined analysis condition for the one or plurality of design variable vectors and includes a plurality of groups of function parameter value sets each including one or a plurality of function parameter values related to one or a plurality of function variables related to a function exhibited by the structure, wherein

for each of the design parameter value sets and each of the function parameter value sets, one of the design parameter value sets and one of the function parameter value sets are associated with each other, the one of the function parameter value sets being acquired based on the one of the design parameter value sets, and one of the one or plurality of design variable vectors, one or a plurality of the analysis conditions, and the one or plurality of function variable vectors are associated with each other, the one or plurality of function variable vectors being acquired for each of the one or plurality of analysis conditions as a result of executing the analysis processing based on the one or plurality of analysis conditions for the one or plurality of design variable vectors, the specifying including:

extracting, by the control unit, according to a user input that selects the one or plurality of design variables for searching and/or the one or plurality of function variables for searching from the one or plurality of function variables and/or the one or plurality of design variable vectors, one of the design parameter value sets and/or one of the function parameter value sets from the storage unit, the one of the design parameter value sets and/or the one of the function parameter value sets being associated with the one or plurality of design variables having been selected and/or the one or plurality of function variables having been selected;

generating, by the control unit, a design function space related to the one or plurality of design variables having been selected and/or the one or plurality of function variables having been selected;

causing, by the control unit, one or a plurality of sample points and/or an approximation region to be displayed in the design function space, wherein the one or plurality of sample points is configured with the one of the design parameter value sets and/or the one of the function parameter value sets and the approximation region is configured with one of the design parameter value sets and/or one of the function parameter value sets, the one of the design parameter value sets and/or the one of the function parameter value sets being associated with the one or plurality of design variables having been selected and/or the one or plurality of function variables having been selected, the one of the design parameter value sets and/or the one of the function parameter value sets being generated by at least some of the plurality of sample points and being approximated by an approximate function; and

specifying, by the control unit, according to a user input that specifies a constraint condition for the one or plurality of design variables and/or the one or plurality of function variables, the one of the design parameter value sets satisfying the constraint condition;

generating information on the structure to be produced, based on the one of the design parameter value sets having been specified in the specifying; and

causing a shaping apparatus to execute shaping of the structure, based on the information on the structure to be produced.

**100**

DESIGN SEARCH APPARATUS

**130**

CONTROL UNIT

**110**

COMMUNICATION UNIT

**120**

STORAGE UNIT

**122**

DATABASE

**140**

INPUT/OUTPUT UNIT

**142**

DISPLAY

**144**

INPUT DEVICE

FIG. 1

FIG. 2

FIG. 3A

FIG. 3B

HOMOGENIZATION

FIG. 4

FIG. 5

FIG. 6

FIG. 7

```
                    ┌─────────────────────┐
                    │        START        │
                    └─────────────────────┘
                               │
                               │                              S100
         ┌─────────────────────────────────────────────┐
         │            DATA REGION GENERATION            │
         └─────────────────────────────────────────────┘
                               │
                               │                              S101
         ┌─────────────────────────────────────────────┐
         │  DEFINITION OF EVALUATION FUNCTION F evaluation │
         └─────────────────────────────────────────────┘
                               │
                               │                              S102
         ┌─────────────────────────────────────────────┐
         │  SETTING OF EVALUATION FUNCTION PARAMETER P  │
         └─────────────────────────────────────────────┘
                               │
                               │                              S103
         ┌─────────────────────────────────────────────┐
         │       SETTING OF DESIGN VARIABLE VECTOR X     │
         └─────────────────────────────────────────────┘
                               │
                               │                              S104
         ┌─────────────────────────────────────────────┐
         │             DATA SET ACQUISITION             │
         └─────────────────────────────────────────────┘
                               │
                               ▼
                    ┌─────────────────────┐
                    │         END         │
                    └─────────────────────┘
```

FIG. 8

START

RECEIVE SELECTION OF VARIABLE
FOR SEARCHING

S200

EXTRACT DATA SETS ASSOCIATED WITH
SELECTED VARIABLE

S201

GENERATE DESIGN/FUNCTION SPACE RELATED
TO SELECTED VARIABLE AND DISPLAY SAMPLE
POINT CLOUD

S202

SAMPLE POINT CLOUD APPROXIMATION

S203

SEARCH FOR PARAMETER VALUES OF
SELECTED VARIABLE

S204

END

FIG. 9

FIG. 10A

FIG. 10B

FIG. 11

EP 4 350 563 A1

FIG. 12

FIG. 13

FIG. 14A

FIG. 14B

FIG. 15A

FIG. 15B

FIG. 16A

FIG. 16B

FUNCTION VARIABLE $y_1$

FUNCTION VARIABLE $y_2$

$x_2$

$x_1$

DESIGN VARIABLE $x_1$

DESIGN VARIABLE $x_2$

FIG. 17

FIXED: x₁

FIG. 18

FIXED: y₁

FIG. 19

FIG. 20

FIG. 21

FIXED: $x_1$

FUNCTION VARIABLE $y_1$

DESIGN VARIABLE $x_1$

FIG. 22

FIXED: $x_2$

FUNCTION VARIABLE $y_1$

DESIGN VARIABLE $x_1$

FIG. 23

FIXED: $y_1$

FUNCTION VARIABLE $y_1$

DESIGN VARIABLE $x_1$

FIG. 24

FIXED: $y_2$

FUNCTION VARIABLE $y_1$

DESIGN VARIABLE $x_1$

FIG. 25

FIXED: $x_2$, $y_2$

FUNCTION VARIABLE $y_1$

DESIGN VARIABLE $x_1$

FIG. 26

```
                    ┌─────────────────────────┐
                    │          START          │
                    └─────────────────────────┘
                                 │
                                 │                        S301
          ┌──────────────────────────────────────────┐
          │                                            │
          │     SPECIFY DESIGN PARAMETER VALUE SET     │
          │       FOR STRUCTURE TO BE PRODUCED         │
          │                                            │
          └──────────────────────────────────────────┘
                                 │
                                 │                        S302
          ┌──────────────────────────────────────────┐
          │                                            │
          │  GENERATE INFORMATION ON STRUCTURE TO BE PRODUCED  │
          │                                            │
          └──────────────────────────────────────────┘
                                 │
                                 │                        S303
          ┌──────────────────────────────────────────┐
          │                                            │
          │               SHAPE STRUCTURE              │
          │                                            │
          └──────────────────────────────────────────┘
                                 │
                                 ▼
                    ┌─────────────────────────┐
                    │           END           │
                    └─────────────────────────┘
```

FIG. 27

## INTERNATIONAL SEARCH REPORT

| International application No. |
| --- |
| **PCT/JP2022/005024** |

| A. | CLASSIFICATION OF SUBJECT MATTER |
| --- | --- |

*G06F 30/10*(2020.01)i; *G06F 30/20*(2020.01)i
FI:   G06F30/10 100; G06F30/20

According to International Patent Classification (IPC) or to both national classification and IPC

| B. | FIELDS SEARCHED |
| --- | --- |

Minimum documentation searched (classification system followed by classification symbols)

G06F30/10; G06F30/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus (JDreamIII); IEEE Xplore

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2020-187642 A (FUJITSU LTD) 19 November 2020 (2020-11-19)<br>paragraphs [0015]-[0040], [0057]-[0066], fig. 1, 3 | 1-29 |
| Y | JP 2012-155636 A (HITACHI LTD) 16 August 2012 (2012-08-16)<br>paragraphs [0032]-[0033] | 1-29 |
| Y | JP 2007-164393 A (HITACHI LTD) 28 June 2007 (2007-06-28)<br>paragraph [0018] | 1-29 |
| Y | JP 2020-64479 A (TOYOTA MOTOR CORP) 23 April 2020 (2020-04-23)<br>paragraphs [0014]-[0015] | 2-3, 14-15, 28 |
| Y | WO 2019/049649 A1 (KOMATSU INDUSTRIES CORPORATION) 14 March 2019<br>(2019-03-14)<br>paragraph [0071] | 5-12, 17-24, 29 |
| Y | JP 2009-169557 A (FUJITSU LTD) 30 July 2009 (2009-07-30)<br>paragraphs [0097]-[0102] | 7, 19 |

| ☑ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 May 2022** | **31 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 350 563 A1**

**INTERNATIONAL SEARCH REPORT**

International application No.

**PCT/JP2022/005024**

**C.      DOCUMENTS CONSIDERED TO BE RELEVANT**

| Category* | Citation of document, with indication, where appropriate, of the relevant passages | Relevant to claim No. |
|---|---|---|
| Y | JP 2014-96147 A (INTERNATIONAL BUSINESS MASCHINES CORPORATION) 22 May 2014 (2014-05-22)<br>    paragraph [0031] | 9, 21 |
| Y | JP 2011-48768 A (HITACHI LTD) 10 March 2011 (2011-03-10)<br>    paragraph [0071], fig. 10 | 11-12, 23-24 |

Form PCT/ISA/210 (second sheet) (January 2015)

**INTERNATIONAL SEARCH REPORT**
Information on patent family members

International application No.

**PCT/JP2022/005024**

| Patent document cited in search report | | | Publication date (day/month/year) | Patent family member(s) | | | Publication date (day/month/year) |
|---|---|---|---|---|---|---|---|
| JP | 2020-187642 | A | 19 November 2020 | US 2020/0364594 A1 paragraphs [0026]-[0058], [0081]-[0093], fig. 1, 3 EP 3739494 A2 CN 111951901 A | | | |
| JP | 2012-155636 | A | 16 August 2012 | (Family: none) | | | |
| JP | 2007-164393 | A | 28 June 2007 | (Family: none) | | | |
| JP | 2020-64479 | A | 23 April 2020 | (Family: none) | | | |
| WO | 2019/049649 | A1 | 14 March 2019 | US 2020/0078847 A1 paragraphs [0097]-[0098] CN 110740822 A | | | |
| JP | 2009-169557 | A | 30 July 2009 | US 2009/0182539 A1 paragraphs [0133]-[0139] CN 101493854 A KR 10-2009-0078303 A | | | |
| JP | 2014-96147 | A | 22 May 2014 | US 2014/0136460 A1 paragraph [0033] CN 103810320 A | | | |
| JP | 2011-48768 | A | 10 March 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2003223480 A